(19) Europäisches Patentamt

European Patent Office

Office européen des brevets

(11) **EP 4 020 332 A1**

(12) **EUROPEAN PATENT APPLICATION**

(43) Date of publication:
**29.06.2022 Bulletin 2022/26**

(21) Application number: **21198520.5**

(22) Date of filing: **23.09.2021**

(51) International Patent Classification (IPC):
**G06N 7/04** (2006.01)      **G06N 3/04** (2006.01)

(52) Cooperative Patent Classification (CPC):
**G06N 7/04; G06N 3/0454**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.12.2020 US 202017131925**

(71) Applicant: **Intel Corporation**
**Santa Clara, CA 95054 (US)**

(72) Inventors:
- **PILLAI, Kamlesh**
  **560017 Bangalore (IN)**
- **KALSI, Gurpreet Singh**
  **560102 Bangalore (IN)**
- **SURESH, Bharathwaj**
  **560055 Karnataka (IN)**

(74) Representative: **Samson & Partner Patentanwälte mbB**
**Widenmayerstraße 6**
**80538 München (DE)**

(54) **BAUM-WELCH ACCELERATOR**

(57)     A processor package comprises at least one Baum-Welch core. The Baum-Welch core comprises a likelihood-value generator, an emission-probability generator, and a transition-probability generator. The likelihood-value generator generates forward values and backward values for a set of observations. The emission-probability generator generates emission probabilities for the set of observations. The transition-probability generator generates transition probabilities for the set of observations. Furthermore, the BW core is to generate, in parallel, at least two types of probability values from the group consisting of forward values, backward values, emission probabilities, and transition probabilities. Other embodiments are described and claimed.

**FIG. 1**

EP 4 020 332 A1

**Description**

Technical Field

The present disclosure pertains in general to data processing systems and in particular to a processing accelerator to facilitate execution of the Baum-Welch algorithm.

Background

The Baum-Welch algorithm is a method for estimating values for the unknown parameters of a hidden Markov model (HMM). The Baum-Welch algorithm is commonly used in a wide range of applications, including speech recognition, cryptanalysis, database search engines, and others. It is also used in addressing learning problems associated with the HMM.

Software in a data processing system may use general purposes processing cores in a processing unit to execute the Baum-Welch algorithm. For instance, a data processing system may use processing cores in a central processing unit (CPU) or in a graphics processing unit (GPU) such as a general-purpose GPU (GPGPU) to execute the stages of the Baum-Welch algorithm.

However, the Baum-Welch algorithm requires multiple iterations of computationally expensive dynamic programming algorithms, including the so-called "forward" algorithm and the so-called "backward" algorithm. Consequently, the Baum-Welch algorithm can have high execution time and can result in significant performance overhead for the applications that use it. For a typical case, the forward and backward stages of the Baum-Welch algorithm need a large amount of multiply-accumulate (MAC) operations. Furthermore, the stages of the algorithm for updating the emission probabilities (EPs) and transition probabilities (TPs) may require up to twice the number of multiplication operations required for the backward stage. The EP and TP stages may also require a large amount of division operations.

Each stage of the Baum-Welch algorithm (except the forward stage) depends on output from the previous stage. Consequently, it is very difficult to execute the stages in parallel. Also, growth in the amount of input data cause growth in the storage and bandwidth requirements. Additionally, the performance overhead is exacerbated by the requirement for multiple iterations on the same input for training.

Consequently, even though applications that use the Baum-Welch algorithm have the advantage of accuracy, they have the disadvantage of high execution time. The time required to perform the Baum-Welch algorithm itself is generally the main contributor to the high execution time of such an application.

Brief Description of the Drawings

Features and advantages of the present invention will become apparent from the appended claims, the following detailed description of one or more example embodiments, and the corresponding figures, in which:

**Figure 1** is a block diagram of an example embodiment of a data processing system that contains a Baum-Welch accelerator.

**Figure 2** is a block diagram to illustrate an example EP matrix, example forward value and backward value vectors, and example output data for an example scenario.

**Figure 3** is a block diagram to illustrate an example TP matrix for that example scenario.

**Figure 4** is a block diagram to illustrate example tiles and related data structures.

**Figure 5** presents a flowchart of an example embodiment of a process for using the Baum-Welch accelerator of Figure 1 to generate maximization parameters for an HMM.

**Figure 6** is a block diagram with further details on communications within the data processing system of Figure 1.

**Figure 7** presents a flow diagram to illustrate parallel operations and other operations within the data processing system of Figure 1.

**Figure 8** is a block diagram with further details on a Baum-Welch core from Figure 1.

**Figure 9** is a block diagram with further details on the compute section from a Baum-Welch core of Figure 8.

**Figure 10** is a block diagram with further details on a likelihood-value-and-transition-probability engine from Figure 9.

**Figure 11** is a block diagram with further details on the EP generator from Figure 8.

**Figure 12** is a block diagram with further details on the emission division pipe from Figure 11.

**Figure 13** is a block diagram with details on a likelihood-value-and-transition-probability engine from an alternative embodiment.

**Figure 14** is a block diagram of a system according to one or more embodiments.

**Figure 15** is a block diagram of a first more specific exemplary system according to one or more embodiments.

**Figure 16** is a block diagram of a second more specific exemplary system according to one or more embodiments.

**Figure 17** is a block diagram of a system on a chip according to one or more embodiments.

Detailed Description

The present disclosure describes a processing accelerator to execute the Baum-Welch algorithm. This processing accelerator may be referred to as a "Baum-Welch (BW) accelerator." As described in greater detail below, a BW accelerator may include features which enable the accelerator to achieve parallelism across various stages of the algorithm (e.g., the forward stage and the backward stage). The BW accelerator may also include features (a) for reducing or minimizing memory bandwidth and storage requirements and (b) for reducing computational overhead, relative to generic a data processing system that uses generic processing cores to perform the Baum-Welch algorithm. The BW accelerator may nevertheless maintain high accuracy. In one embodiment, a BW accelerator uses novel hardware optimizations to reduce and accelerate overall compute operations, including (a) features to parallelize aspects of the Baum-Welch algorithm such as the forward-backward value calculations and 2) features to cache states that are likely to be reused. The present disclosure also describes one or more new instructions to drive the BW accelerator.

According to one embodiment, a data processing system may use a BW accelerator to perform the Baum-Welch algorithm in a wide spectrum of domains (e.g., speech recognition, cryptanalysis, database searching, mitigating learning problems associated with HMMs, etc.). For instance, a data processing system may use a BW accelerator to mitigate learning problems for HMMs that are used in connection with deep neural networks (DNNs).

The Baum-Welch Algorithm:

The Baum-Welch algorithm is a type of expectation-maximization (EM) algorithm. As such, the Baum-Welch algorithm is a method for solving an expectation-maximization problem. In particular, the Baum-Welch algorithm is an iterative method for estimating parameters in a statistical model, where the model involves unobserved variables (which may also be referred to as "latent variables" or "hidden variables"). More specifically, the Baum-Welch algorithm is a method for finding parameter values that are most likely correct ("maximum likelihood parameters"), based on observed data ("observations"). In other words, the Baum-Welch algorithm generates a maximum likelihood estimate of the unknown parameters. The Baum-Welch algorithm does so by maximizing the marginal likelihood of the observed data.

Each iteration of the Baum-Welch algorithm involves an expectation stage, followed by a maximization stage. In the expectation stage, the algorithm calculates likelihood values based on the observations. In particular, in the expectation stage, the algorithm performs a forward calculation stage to calculate forward probability values and a backward probability calculation stage to calculate backward probability values, as described in greater detail below. For purposes of this disclosure, the forward probability values and the backward probability values from an expectation stage may be referred to respectively as forward values and backward values, and collectively as "forward-backward (F-B) values" or "likelihood values" (LVs).

In the maximization stage, the algorithm uses those likelihood values to update the parameters of a model to maximize likelihood of the observations when using the posterior (i.e., updated) parameters. The parameters that are updated in the maximization stage may be referred to as "maximization parameters," and they include transition probabilities (TPs) and emission probabilities (EPs). In particular, the TPs may be stored in TP vectors in a TP matrix, and the EPs may be stored EP vectors in an EP matrix.

In other words, the Baum-Welch algorithm takes a set of input values "S" and uses those input values as observations to update the maximization parameters (i.e., the TPs and the EPs) of a statistical model "G(V, A)", where V is a set of vertices or nodes, and A is a set of directed edges or transitions. In particular, the algorithm performs expectation maximization based on S in three stages: 1) forward calculation, 2) backward calculation, and 3) maximization-parameter update.

Forward Calculation:

In the forward calculation stage, the algorithm processes the observations (or "elements") of S in order from the first element "S[1]" to the last element "S[$n_s$]", where "$n_s$" is the length of (i.e., the number of elements in) S. For each step "t" in that process, the algorithm uses maximization parameters to calculate the set of forward values "Ft(i)" when the element "S[t]" is emitted in a states "vi", given that all previous inputs S[1] through S[t-1] are processed by following an unknown path that leads to states vi. Thus, it is assumed that Ft(i) represents the likelihood of such events occurring for a given element S[t] and states vi.

For instance, for the first step in the process, the algorithm uses the value of element #1 and the maximization parameters to compute the F2(i), where F2(i) is the set of probabilities that indicates how probable it is, for each state i in V, that element #2 will have that state. In particular, in one embodiment, the forward calculation stage calculates Ft(i) according to the following Equation 1.

$$F_t(i) = \sum_{j \in V} F_{t-1}(j) \alpha_{ji} e_{S[t]}(v_i) \quad i \in V, \quad 1 < t \le n_S \quad (1)$$

Backward Calculation:

The backward calculation stage uses maximization parameters to process from the last element of input S (i.e., S[ns]) to the first element of input S (i.e., S[1]). The goal of the backward calculation is similar to the forward calculation except it processes states and inputs in a reverse manner to find the backward values. The set of backward values "Bt(i)" represents the likelihoods of element S[t] being in states vi, given that all further inputs S[t+1] through S[ns] are processed by following an unknown path from backwards (i.e., taking reverse transitions) that leads to states vi. In one embodiment, the backward calculation stage calculates Bt(i) according to the following Equation 2.

$$B_t(i) = \sum_{j \in V} \alpha_{ij} e_{S[t+1]}(v_j) B_{t+1}(j) \quad i \in V, \quad 1 \le t < n_S \quad (2)$$

Maximization-Parameter Update:

In the maximization-parameter update stage, the algorithm uses the likelihood values (i.e., the forward and backward values) calculated in the previous two stages as an expectation to update the EPs and TPs in G(V, A) such that posterior probabilities will maximize the likelihood values when the observations are S. Thus, the Baum-Welch algorithm uses the likelihood values from the expectation stage as statistics to update the maximization parameters. In particular, in one embodiment, the algorithm updates the TPs according to the following Equation 3 and the EPs according to the following Equation 4.

$$\alpha_{ij}^* = \frac{\displaystyle\sum_{t=1}^{n_S-1} \alpha_{ij} e_{S[t+1]}(v_j) F_t(i) B_{t+1}(j)}{\displaystyle\sum_{t=1}^{n_S-1} \sum_{x \in V} \alpha_{ix} e_{S[t+1]}(v_x) F_t(i) B_{t+1}(x)} \quad \forall \alpha_{ij} \in A$$

$$(3)$$

$$e_X^*(v_i) = \frac{\displaystyle\sum_{t=1}^{n_S} F_t(i) B_t(i) [S[t] = X]}{\displaystyle\sum_{t=1}^{n_S} F_t(i) B_t(i)} \quad \forall X \in \Sigma, \forall i \in V \quad (4)$$

In Equation 4, [S[t] = X] is a conditional variable that returns 1 if the condition is satisfied (i.e., S[t] = X where X is an element of Σ) and 0 otherwise.

In addition, the stages are commonly iterated. In particular, the Baum-Welch algorithm commonly involves using the posterior maximization parameters (i.e., the posterior TPs and EPs) from one iteration in a next iteration, with the posterior maximization parameters being used to perform a new set of forward and backward calculations to generate a new set of likelihood values, and with those new likelihood values being used to generate a new set of maximization parameters. Iterations may be performed on the same input until probabilities converge to a point where the updates to maximization parameters become negligible.

BW Accelerator:

As indicated above, the present disclosure describes a processing accelerator to execute the Baum-Welch algorithm, and this processing accelerator may be referred to as a "BW accelerator." As described in greater detail below, a BW accelerator may include one or more processing cores that are designed to effectively and efficiently execute some or all aspects of the Baum-Welch algorithm. Such a processing core may be referred to as a "BW core," and it may be implemented as hardware circuitry.

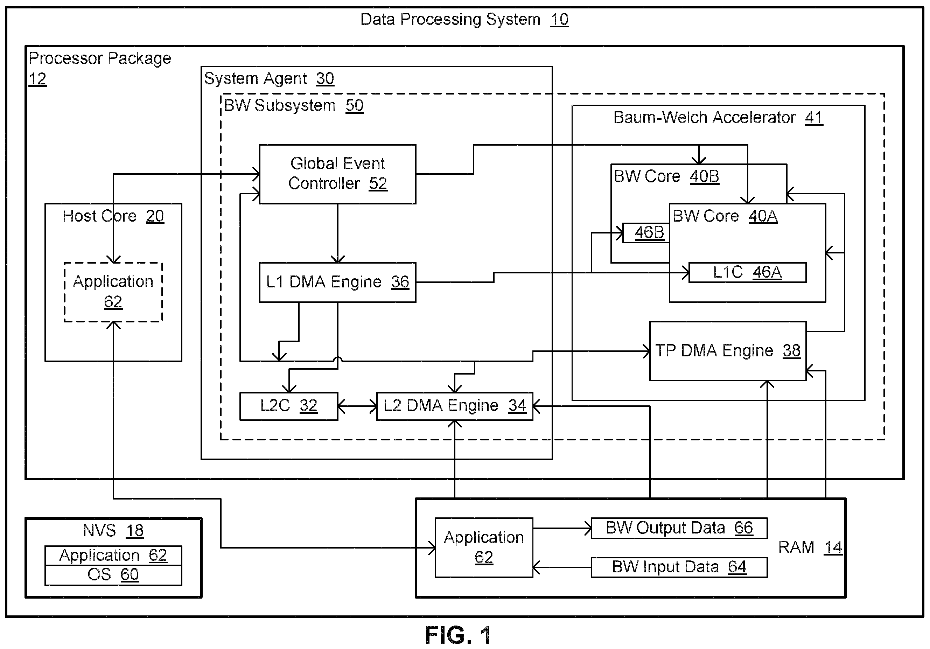

Figure 1 is a block diagram of an example embodiment of a data processing system 10 that contains a BW accelerator 41. In particular, for purposes of illustration, Figure 1 depicts a hypothetical data processing system 10 includes a processor package 12 that includes a host core 20, a system agent 30, and BW accelerator 41, with multiple BW cores 40A-40B residing in BW accelerator 41, and with a global event controller 52 and other components residing in system agent 30. Each of those components (i.e., host core 20, system agent 30, BW accelerator 41, BW cores 40A-40B, global event controller 52, and other components residing in system agent 30) may be implemented as respective hardware circuits. Host core 20 may be a general-purpose processing core, for instance. Accordingly, host core 20 may also be referred to as a "host processor." However, the number and arrangement of the components may differ in other embodiments. For instance, in other embodiments, the processor package may include a single BW core, or more than two BW cores. In addition or alternatively, the processor package may include more than one host core. In addition or alternatively, the data processing system may include multiple processor packages, with one or more host cores on one (or more) processor package and one or more BW accelerators with one or more BW cores on one or more different processor packages. In another embodiment, some or all of the components of a BW accelerator may reside inside of the system agent. Possible embodiments include data processing systems with 4, 8, 16, 32, or more BW cores.

Data processing system 10 also includes random-access memory (RAM) 14 and non-volatile storage (NVS) 18 that are coupled to or in communication with processor package 12. RAM 14 serves as main memory or system memory, and it may be implemented as one or more modules of dynamic random-access memory (DRAM), for instance. NVS 18 may include software such as an operating system (OS) 60 and an application 62. Application 62 may be a speech recognition application, a cryptanalysis application, a database search application, or any other type of application that uses the Baum-Welch algorithm to estimate parameters of an HMM.

Data processing system 10 may copy the software from NVS 18 into RAM 14 for execution. NVS 18 may also include input data for application 62, and data processing system 10 may copy that input data into RAM 14 for processing. In another embodiment or scenario, application 62 obtains the BW input data from another source. For purposes of this disclosure, the original input data for the Baum-Welch algorithm may be referred to as "BW input data" 64. In particular, BW input data 64 includes a sequence of observations. For example, in one embodiment or scenario, those observations represent a sequence of nucleotides (e.g., adenine, cytosine, guanine, and uracil (or thymine)) that were detected in a deoxyribonucleic acid (DNA) sample from a patient, and each observation has one of four values, such as A, C, G, and U (or such as 0-3, with each number corresponding to A, C, G, or U). In other embodiments or scenarios, the observations pertain to financial transactions or to any other subject that is suitable for analysis with the Baum-Welch algorithm.

As described in greater detail below, application 62 uses components such as global event controller 52 and BW accelerator 41 to process BW input data 64. For purposes of this disclosure, global event controller 52, BW accelerator 41, and the components outside of host core 20 which enable global event controller 52 and BW accelerator 41 to cooperate may be referred to collectively as a "BW subsystem" 50.

Application 62 includes instructions which, when executed by host core 20, cause BW accelerator 41 to use the Baum-Welch algorithm to estimate maximization parameters for an HMM, based on the observations in BW input data 64. Thus, application 62 is designed to utilize a BW accelerator to generate maximization parameters for an HMM, based on BW input data. Those generated parameters may be referred to as "processed output" or as "BW output data 66."

As illustrated in Figure 1, some components of BW subsystem 50 reside in system agent 30. Those components include a level-2 cache (L2C) 32. Also, each BW core includes a level-one cache (L1C), such as L1C 46A in BW core 40A and L1C 46B in BW core 40B. An L1C may also be referred to as "local memory" or "a local buffer." The components of BW subsystem 50 in system agent 30 also include an L1 direct memory access (DMA) engine 36 which manages transfers of data into L1 caches such as L1C 46A from a source such as L2C 32. A DMA transfer into L1 cache may be referred to as an "L1 DMA transfer." In the embodiment of Figure 1, DMA engine 36 is implemented in hardware. In an alternative embodiment, a data processing system may use one or more DMA engines that are implemented in software, or in a combination of hardware and software. In general, a DMA engine initiates and supervises data transfers from source to destination. The components of BW subsystem 50 in system agent 30 also include an L2 DMA engine 34, which manages transfers of data into L2C 32 from a source such as RAM 14. The components of BW subsystem 50 in system agent 30 also include global event controller 52, which keeps track of scheduling and execution of various events at different stages and components of the system. For instance, global event controller 52 may act as a synchronizing agent or a master across other components of BW subsystem 50. Accordingly, a global event controller may also be referred to as a "master event controller."

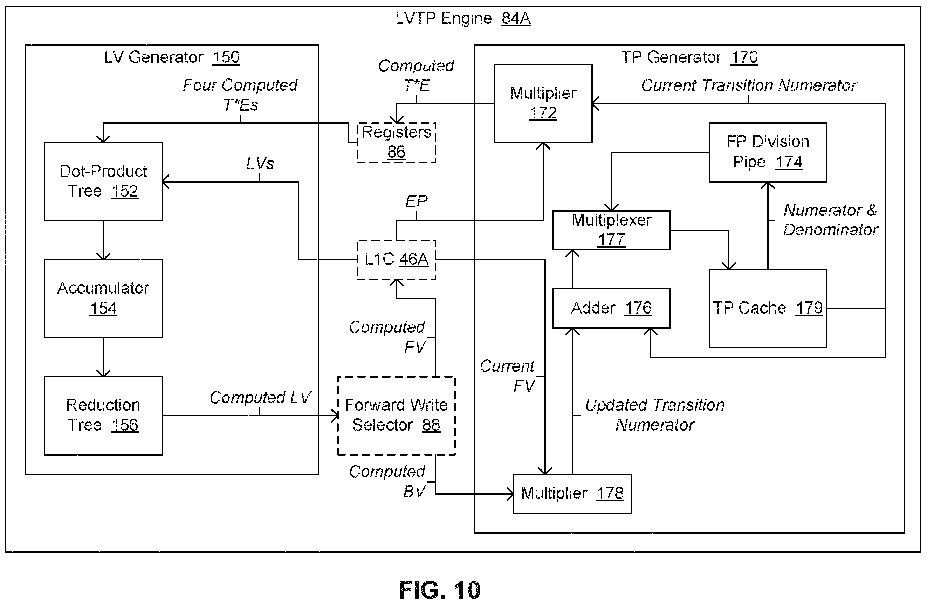

As indicated above, BW accelerator 41 includes BW cores 40A-40B. BW accelerator 41 also includes a TP DMA engine 38, which initiates and supervises transfers of TP data from RAM 14 to BW cores. In particular, as described in greater detail below, each BW core includes a TP cache, and global event controller 52 uses TP DMA engine 38 to write to and read from that TP cache. For instance, as described in greater detail below with regard to Figure 10, BW core 40A includes a TP cache 179, and when global event controller 52 decides to copy vectors from an initial TP matrix from RAM 14 to TP cache 179 in BW core 40A, global event controller 52 uses TP DMA engine 38 to initiate and supervise those transfers.

L2 DMA engine 34 uses an L2 DMA table to load observation data and vectors from an initial EP matrix into L2C 32, and L1 DMA engine 36 uses an L1 DMA table to write such data into the L1C within each core. As illustrated, processor package 12 also includes various interconnects to couple various components, to enable those components to communicate with each other.

As indicated above, each BW core includes an L1C of a particular size, and a TP cache of a particular size. As described in greater detail below, each BW core also include numerous other components. In one embodiment, the L1C is able to hold significantly more data (e.g., observations and EP vectors) than the BW core can process in an iteration of the Baum-Welch algorithm, due to constraints imposed by one or more of the other components of the BW core. For purposes of this disclosure, the amount of data that a BW core can process in an iteration of the Baum-Welch algorithm may be referred to as a the "L1 chunk size." Also, a data value which specifies the size of the L2C in the BW subsystem may be referred to as the "L2 chunk size."

BW subsystem 50 (e.g., global event controller 52) uses a particular type of instruction to cause a specific BW core to generate the maximization parameters for an HMM, or for a portion of an HMM. For purposes of this disclosure, such an instruction may be referred to as a "BW acceleration instruction" or a "BWAXF instruction."

In addition, before any BWAXF instructions are executed, application 62 may configure BW subsystem 50 with data to cause BW subsystem 50 to apply a particular statistical model as the HMM. That configuration may be referred to as the "network" for that particular statistical model. The statistical model itself may also be referred to as a "network." In particular, application 62 may configure BW subsystem 50 to process the input data according to a Bayesian network involving a directed acyclic graph, where the network has predetermined features/attributes pertinent to the type of input data being processed. The data that application 62 uses to configure BW subsystem 50 may be referred to as "BW configuration data." For instance, the BW configuration data may include/specify attributes such as the following:

- the "read size" (i.e., the total number "N" of observations/elements in BW input data 64);
- the "read type," which is the data type for the observation/elements, which may also indicate the "observation size" or "element size" (i.e., the amount of storage space needed to hold an observation/element);
- the number of potential states/values for an observation;
- the potential states/values for observations;
- an initial EP matrix;
- an initial TP matrix; and
- a convergence threshold value to be used by BW cores to determine whether sufficient iterations of the Baum-Welch algorithm have been completed.

In addition, the BW configuration data may specify attributes of BW subsystem 50 such as the number of BW cores, the size of the L1C in each core, and the size of the L2C in BW subsystem 50. Alternatively, global event controller 52 may be preconfigured with those kinds of attributes, and/or global event controller 52 may detect those kinds of attributes. Thus, global event controller 52 will "know" about the attributes specified by application and the attributes that are preconfigured into global event controller 52 or discovered by global event controller 52. Global event controller 52 may also determine characteristics of BW subsystem 50 based on other known attributes. For instance, global event controller 52 may compute the L1 chunk size, based at least in part on the size of the L1C.

After loading the desired network into BW subsystem 50, if BW input data 64 is relatively small (e.g., containing not more than 100 or 200 or 500 or 1000 or 2000 observations, depending on factors such as the observation size and the storage capacity of each BW core), BW subsystem 50 may use a single BWAXF instruction and a single BW core to process the entire set of observations. However, if BW input data 64 is relatively large (e.g., containing more than 100 or 200 or 500 or 1000 or 2000 observations), BW subsystem 50 may split the input data into multiple sub-vectors or subsets of observations, and BW subsystem 50 may cause multiple BW cores (or a single BW core) to apply the Baum-Welch algorithm to those subsets.

For purposes of this disclosure, the term ""input slice" refers to a sequence of elements of the BW input data, to be processed as a set by a BW core by applying one or more iterations of the Baum-Welch algorithm to those elements.

Thus, BW subsystem 50 may split BW input data 64 into two (or more) input slices. BW subsystem 50 may then use multiple BW cores (or a single BW core) to process those input slices. In one embodiment, global event controller 52 defines each input slice to have a size that (a) can be loaded into the L1C of a BW core and (b) can be processed by that BW core without any access to RAM by the BW core.

Also, a BW core uses EP vectors and TP vectors which correspond to the elements in an input slice to apply the Baum-Welch algorithm to those elements. For purposes of this disclosure, the term "filter" refers to the maximization parameters that pertain to a particular observation. In particular, in one embodiment or scenario, each filter contains (a) one EP vector and (b) a certain number of TP vectors (e.g., one TP vector for each potential observation state).

In addition, global event controller 52 may collect multiple filters pertaining to an input slice into a collection known as a "filter block." For instance, in connection with generating an input slice, global event controller 52 may generate a filter block that contains all of the filters which pertain to the observations in that input slice. for purposes of this disclosure, the EP vectors in a filter block may be referred to as collectively as an "EP slice," and the TP vectors in that filter block may be referred to as collectively as a "TP slice." In other words, an EP slice includes the vectors from an EP matrix which pertain to the observations in an input slice, and a TP slice includes the vectors from a TP matrix which pertain to those observations.

Also, an input slice and the corresponding filter block may be referred to collectively as a "BW input unit." In one embodiment, global event controller 52 creates BW input units according to the L1 chunk size. In other words, each BW unit is designed to be processable as a set by a BW core. Thus, each BW input unit is less than or equal to the L1 chunk size.

Global event controller 52 may also create a data structure known as a "tile" that includes one or more BW input units. In one embodiment, global event controller 52 defines each tile to have a size that can be loaded into the L1C of a BW core. Global event controller 52 may then cause each BW core to process one or more tiles. For instance, global event controller 52 may split the input data into multiple tiles (each containing at least one input slice), and global event controller 52 may cause a different BW core to apply the Baum-Welch algorithm to each of those tiles. Consequently, BW subsystem 50 may execute at least some parts of the Baum-Welch algorithm in parallel. Also, as indicated above, BW subsystem 50 may assign multiple successive tiles to a BW core. Also, when a BW core processes a tile, the BW core may apply the Baum-Welch algorithm to one slice at a time.

For instance, global event controller 52 may create first and second tiles, and global event controller 52 may then use a first BWAXF instruction to cause BW core 40A to process the first tile and a second BWAXF instruction to cause BW core 40B to process the second tile. Likewise, in a data processing system with 4 BW cores and BW input data containing 10,000 observations, the global event controller may split the input data into 16 input slices containing 625 observations each, the global event controller may create 4 tiles containing 4 input slices each, and the global event controller may use four BWAXF instructions to cause each BW core to process one of those tiles. And to process that same BW input data in a data processing system with only two BW cores, the global event controller may may use four BWAXF instructions (two per BW core) to cause each BW core to process two of those tiles. Thus, each BWAXF instruction is directed to a specific BW core, and that BW core then executes that BWAXF instruction.

Any suitable technique may be used to define or specify data structures such as input slices, filters, filter blocks, and tiles. For instance, an input slice may include the relevant observation values, or the input slice may include data to specify (e.g., to identify or locate) the relevant observation values. In either case, the input slice may be referred to as "containing" or "including" those observations. Sets of maximization parameters may also be referred to in this manner. For instance, a filter that is discussed as containing or including certain TP vectors may include the relevant TP vector elements, or it may include data that specifies the relevant TP vector elements. Other data structures (e.g., filter blocks and tiles) may also be referred to in this manner.

For purposes of illustration, this disclosure discusses a hypothetical scenario in which BW input data 64 includes 3000 observations reflecting a DNA read sequence involving four potential states for the observations: A, C, G, and U. Also, as described in greater detail below, in this scenario, global event controller 52 splits BW input data 64 into 6 input slices, each containing 500 observations, and global event controller 52 creates two tiles, each containing 3 of those input slices. Also, all of the observations in a tile may be referred to collectively as an "observation tile," all of the TP vectors in a tile may be referred to collectively as a "TP tile," and so on.

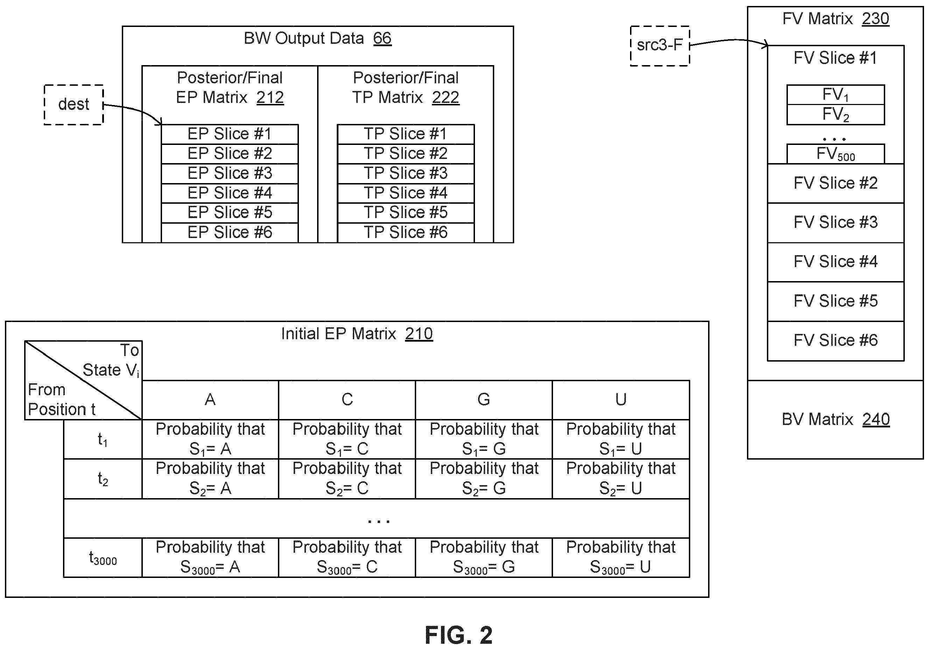

**Figure 2** is a block diagram to illustrate an example EP matrix 210, example forward value and backward value vectors 233 and 240, respectively, and example BW output data 66 for such a scenario. Each of those data structures or files may reside in RAM 14 at one time or another. In the example scenario, EP matrix 210 gives the probability of observing each of the potential states (A, C, G, and U), for each position in the input sequence. In other words, EP matrix 210 includes probability values that indicate, for each position "t" within BW input data 64 (i.e., for ti to $t_{3000}$) and for each potential state "V" (i.e., for each of states A, C, G, and U), the likelihood of the observation in that position being in that state. For instance, the first element in EP matrix 210 reflects the probability of the first observation being in state A, the second element in EP matrix 210 reflects the probability of the first observation being in state C, and so on, with the last element in EP matrix 210 reflecting the probability of the last observation (at position $t_{3000}$) being in state U.

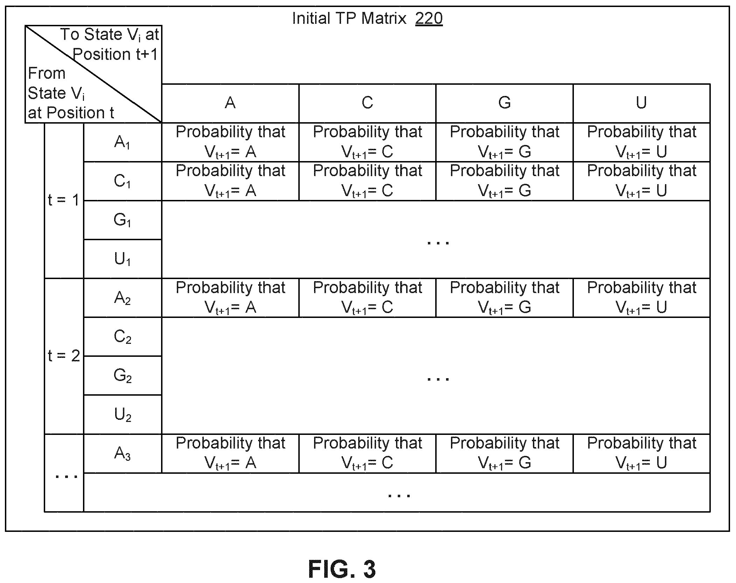

**Figure 3** is a block diagram to illustrate an example TP matrix 220 for such a scenario. In the example scenario, TP matrix 220 gives the probability of transitioning from each potential state to each potential state, for each position in the input sequence. In other words, TP matrix 220 includes probability values that indicate, for each current position "t" within BW input data 64 except for the last position (i.e., for ti to $t_{2999}$) and for each potential state "V" at the current position, the likelihood of the observation in the next position (i.e., at position t+1) being in a particular one of the potential states when the observation at the current position is as specified. For instance, the first element in TP matrix 220 reflects the probability of the second observation being in state A when the first observation is A, the second element in TP matrix 220 reflects the probability of the second observation being in state C when the first observation is A, and so on, with the last element in TP matrix 220 reflecting the probability of the last observation being in state U when the penultimate observation is in state U.

The network that application 62 loads into BW subsystem 50 may include initial probability values for EP matrix 210 and TP matrix 220. Accordingly, EP matrix 210 and TP matrix 220 may be referred to respectively as initial EP matrix 210 and initial TP matrix 220, to indicate that those matrices include initial probability values. Consequently, initial EP matrix 210 and initial TP matrix 220 may reflect predetermined expectations for the behavior of the network.

Also, although matrices may be illustrated herein with a certain structure, including rows and columns, the elements of a matrix may simply be stored as a sequence of probability values. For instance, the elements of initial TP matrix 220 in RAM 14 may look like the following sequence of probability values (where each probability value is a numeric value between 0 and 1): probA1A, probA1C, probA1G, probA1U, probCIA, probCIC, ... probU2999U.

Also, referring again to Figure 2, by processing BW input data 64, data processing system 10 may generate BW output data 66 that includes a posterior EP matrix 212 and a posterior TP matrix 222, where those matrices include probability values that BW subsystem 50 has updated or changed, relative to initial EP and TP matrices 210 and 220, by applying the Baum-Welch algorithm to BW input data 64. In addition, as indicated above, BW subsystem 50 may complete multiple iterations of the Baum-Welch algorithm before determining that the updates to the maximization parameters have become negligible. For purposes of this disclosure, the EPs and TPs that BW subsystem 50 uses to generate new/updated EPs and TPs may be referred to as the "current" EPs and TPs, and the generated EPs and TPs may be referred to as the "posterior" EPs and TPs. As indicated above, for the first iteration, BW subsystem 50 may use initial EP matrix 210 and initial TP matrix 220 as the current EP and TP matrices. And in response to determining that the updates to the maximization parameters have become negligible, BW subsystem 50 may treat the last set of posterior EP and TP matrices 212 and 222 as final EP and TP matrices 212 and 222.

Additionally, in the expectation stage of the Baum-Welch algorithm, a BW core generates forward values and backward values, as indicated above. For purposes of this disclosure, a complete set of forward values for BW input data 64 may be referred to as a forward value (FV) matrix 230, and a complete set of backward values for BW input data 64 may be referred to as a backward value (BV) matrix 240.

Also, in the example scenario involving six input slices, each BW core may generate a portion of FV matrix 230 and a portion of BV matrix 240. For purposes of this disclosure, a portion of an FV matrix that is generated based on an input slice may be referred to as an "FV slice," and a portion of a BV matrix that is generated based on an input slice may be referred to as a "BV slice." When BW core 40A processes input slice #1, BW core 40A generates a corresponding FV slice #1. As shown in Figure 2, FV slice #1 contains a sequence of 500 FVs, from $FV_1$ to $FV_{500}$. And when BW core 40A processes input slice #2, BW core 40A generates a corresponding FV slice #2. And so on, with BW core 40A generated three FV slices and three BV slices, and with BW core 40B generating three other FV slices and the other BV slices.

Similarly, in the maximization stage, a BW core generates posterior EP and TP values. And in the example scenario involving six input slices, each BW core may generate a portion of posterior EP matrix 212 and a portion of posterior EP matrix 222. For purposes of this disclosure, a portion of an EP matrix that is generated by applying the Baum-Welch algorithm to an input slice may be referred to as a "posterior EP slice," and a portion of a TP matrix that is generated by applying the Baum-Welch algorithm an input slice may be referred to as a "posterior TP slice." When BW core 40A processes input slices #1-#3, BW core 40A generates three corresponding posterior EP slices and three corresponding posterior TP slices. And when BW core 40B processes input slices #4-#6, BW core 40B generates three additional posterior EP slices and three additional posterior TP slices. Thus, posterior EP matrix 212 and posterior TP matrix 222 may each include 6 slices.

As indicated above, in the example scenario, BW input data 64 includes 3000 observations, and BW subsystem 50 splits BW input data 64 into 6 input slices, each containing 500 observations. BW subsystem 50 will then use BW core 40A to process three of those input slices and BW core 40B to process the other three input slices.

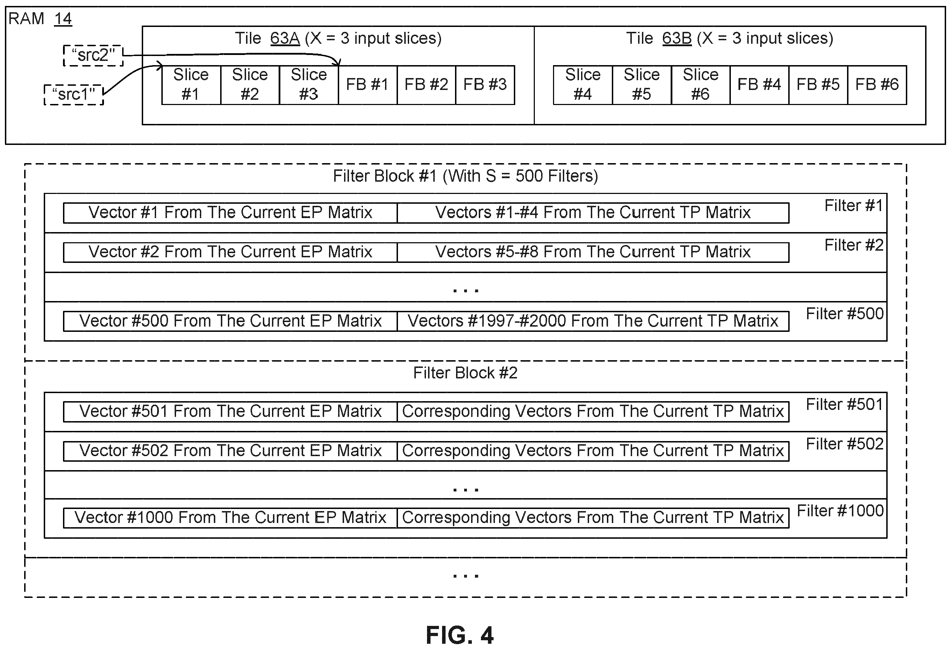

**Figure 4** is a block diagram to illustrate tiles and related data structures. In Figure 4, the first three input slices from BW input data 64 are shown as input slice #1 through input slice #3, and the last three input slices are shown as input slice #4 through input slice #6. In particular, in the hypothetical scenario, global event controller 52 has decided to assign input slices #1-#3 to BW core 40A and to assign input slices #4-#6 to BW core 40B. Consequently, global event controller 52 has copied input slices #1-#3 into a first tile 63A in RAM 14, and global event controller 52 has copied input slices #4-#6 into a second tile 63B in RAM 14. Global event controller 52 will subsequently use BWAXF instructions to cause core 40A to process tile 63A and core 40B to process tile 63B.

Global event controller 52 may also include filter blocks in each tile, as indicated above. For instance, as shown in Figure 4, in the hypothetical scenario, global event controller 52 has stored input slices #1-#3 and corresponding filter blocks (FBs) #1-#3 in tile 63A, and global event controller 52 has stored input slices #4-#6 and corresponding FBs #4-#6 in tile 63B. (For purposes of illustration, the "FBs" in tiles 63A and 63B are shown with solid lines to indicate that the filter blocks reside in those tiles, while "filter block #1," "filter block #2," etc. are shown with dotted lines below tiles 63A and 63B, to indicate that "filter block #1," "filter block #2," etc. are expanded views of the corresponding FBs in tiles 63A and 63B.) Global event controller 52 may have created filter block #1, for instance, by adding the first vector from the current EP matrix and the first four vectors from the current TP matrix to a first filter ("filter #1") within filter block #1, and so on, until filter block #1 contains filters #1-#500. Thus, global event controller 52 may create one filter for each observation in an input slice, with those filters residing in a filter block.

In Figure 4, in filter block #1, the block labeled "Vector #1 From The Current EP Matrix" denotes the first row or vector of the current EP matrix, which includes the emission probability values for position #1 (i.e., observation #1) to be in each of the four potential observation states, as shown in Figure 2. Similarly, the block labeled "Vectors #1-#4 From The Current TP Matrix" denotes the first four rows or vectors of the current TP matrix. Those rows include the transition probability values each of the four potential states of position #1. For instance, the first of those rows reflects the probability for position #2 to be in each of the four potential observation states when position #1 has the state A, as shown in Figure 3. Thus, in the hypothetical scenario, filter block #1 includes the EP and TP vectors which pertain to the observations in input slice #1, and so on. Alternatively, as indicated above, a filter may include pointers to TP vectors, instead of those actual vectors.

As illustrated in Figure 4, global event controller 52 creates six filter blocks, with each filter block containing 500 filters, and with each filter containing an EP vector and certain number of TP vectors for a corresponding observation in an input slice. As further illustrated in Figure 4, the first three input slices and the three corresponding filter blocks reside in tile 63A, and the other three input slices and the filter blocks for those input slices reside in tile 63B.

After creating tiles 63A and 63B, global event controller 52 may use a first BWAXF instruction to cause BW core 40A to process the input slices in tile 63A, and a second BWAXF instruction to cause BW core 40A to process the input slices in tile 63B. Global event controller 52 may thus process at least some parts of the Baum-Welch algorithm in parallel.

In the scenario of Figure 4, tile 63A includes three BW input units, and tile 63B includes three BW input units. Global event controller 52 has configured each tile to fit within the L1C of a BW core and each input slice to be processable as a set by a BW core. For instance, if the L1C of each BW core has a capacity of 1 megabyte (MB), global event controller 52 may use a tile size that is less than or equal to 1 MB, global event controller 52 may split BW input data 64 into input slices each of which is small enough, when combined with the corresponding filter blocks, to be processable as a set by a BW core.

Before sending a BWAXF instruction to a BW core, global event controller 52 loads the tile to be processed into the L1C of a that BW core. Global event controller 52 thereby allows that BW core to avoid consuming execution time and data transfer bandwidth during the processing of that tile. Also, as indicated above, global event controller 52 may supply each BW core with a tile that contains one or more input slices and one or more corresponding filter blocks, and global event controller 52 may cause those BW core to process that data by sending BWAXF instructions with different parameter values to those BW cores.

In one embodiment, the BW acceleration instruction (or "BWAXF instruction") uses a format with the following instruction ID and parameters:

*BWAXF dest, src1, src2, src3.*

According to that format, the last two characters or bytes of the instruction ID (i.e., X and F) identify the number of input slices to be processed from a particular tile, and the number of filters to be used with each input slice, respectively. For instance, "BMA3500" indicates that 3 input slices are to be processed from the current tile, and 500 filters are to be used for each input slice, as per the hypothetical scenario discussed above.

Also, the src3 parameter has three parts, which may be referred to respectively as "src3-F," "src3-Y." and "src3-Z." With regard to the value (or set of values) that is supplied for src3, the last byte is used for src3-Z, the penultimate byte is used for src3-Y, and the rest is used for src3-F. The following list reiterates the meaning of the "X" and "F" bytes from the instruction ID, and it explains the meaning of the other parameters of the BWAXF instruction:

> *X: specifies the number of input slices to be processed from the current tile.*
> *F: specifies the number of filters to be used with each input slice.*
> *dest: specifies the base address for saving the posterior EP values for the current tile.*
> *src1: specifies the base address for the input slices for the current tile.*
> *src2: specifies the base address of the filter blocks for the current tile.*

*src3-F: specifies the base address for the forward values for the current tile.*
*src3-Y: specifies the number of observations/elements per input slice.*
*src3-Z: specifies the total number of probabilities/elements in each filter.*

For instance, with regard to Figure 4, in the scenario discussed above, global event controller 52 sends a first BWAXF instruction to BW core 40A to cause BW core 40A to process tile 63A, and global event controller 52 sends a second BWAXF instruction to BW core 40B to cause BW core 40B to process tile 63B. In particular, for that first BWAXF instruction, in order to cause BW core 40A to process tile 63A as the "current" tile, global event controller 52 may set the parameters to the following values:

*X = 3: specifies the number of input slices to be processed from the current tile.*
*F = 500: specifies the number of filters to be used with each input slice.*
*dest = base address for posterior EP matrix: specifies the base address for the posterior EP values for the current tile (see Figure 2).*
*src1 = base address for slice #1: specifies the base address for the input slices for the current tile.*
*src2 = base address for FB #1: specifies the base address of the filter blocks for the current tile.*
*src3-F - based address for FV slice #1: specifies the base address for the forward values for the current tile (see Figure 2).*
*src3- Y = 500: specifies the number of elements per input slice.*
*src3-Z = 20: specifies the total number of elements in each filter.*

In the hypothetical scenario, global event controller 52 sets "src3-Z" to 20, since there are 20 elements in each filter: 4 elements from the EP vector, and 16 elements from the 4 TP vectors (each of which has 4 elements).

Also, as shown in Figure 2, for tile 63A, global event controller 52 sets "src3-F" to the base address for the FV slice (i.e., FV slice #1) that BW core 40A will generate, based on input slice #1. Similarly, global event controller 52 sets "dest" to the base address for writing back the processed data (i.e., the updated TPs and EPs) for the current tile. In particular, as shown in Figure 2, global event controller 52 sets "dest" for tile 63A to the base address for the EP slice (i.e., EP slice #1) that BW core 40A will generate, based on input slice #1.

By contrast, the second BWAXF instruction mentioned above, which is ultimately directed to BW core 40B, includes a "dest" parameter that points to the beginning of EP slice #4 (see Figure 2), a "src1" parameter that points to input slice #4 (see Figure 4), a "src2" parameter that points to filter block #4 (see Figure 4), and a "src3-F" parameter that points to the beginning of FV slice #4 (see Figure 2).

A BW core may treat parameters such as "dest" as pointers, and the BW core may update those pointers as necessary. For instance, when a BW core finishes one input slice and starts the next input slice from the current tile, the BW core may automatically adjust the relevant pointers accordingly. For example, when BW core 40A finishes processing input slice #1, BW core 40A may automatically update the "dest" pointer to point to the beginning of EP slice #2 (see Figure 2), the "src1" pointer to point to input slice #2 (see Figure 4), the "src2" pointer to point to filter block #2 (see Figure 4), and the "src3-F" pointer to point to the beginning of FV slice #2 (see Figure 2).

Also, BW cores may automatically compute the base address for other data structures, based on the above parameters. Those other data structures may include the BV slices and TP slices. For instance, BW core 40A may automatically calculate the base address for saving the backward values for tile 63A by adding the size of the FV matrix to "src3-F" pointer. Similarly, BW core 40A may automatically calculate the base address for saving TPs by adding the size of the EP matrix to the "dest" pointer. And BW core may calculate values such as the size of the FV matrix and the size of the EP matrix based on the total number "N" of observations in BW input data 64. Similarly, BW core 40A may compute the total size for FV matrix 230 based on the size of an element and the total number of elements for FV matrix 230, which equals "N". Accordingly, BW core 40A may be configured to store BV matrix 240 immediately following FV matrix 230.

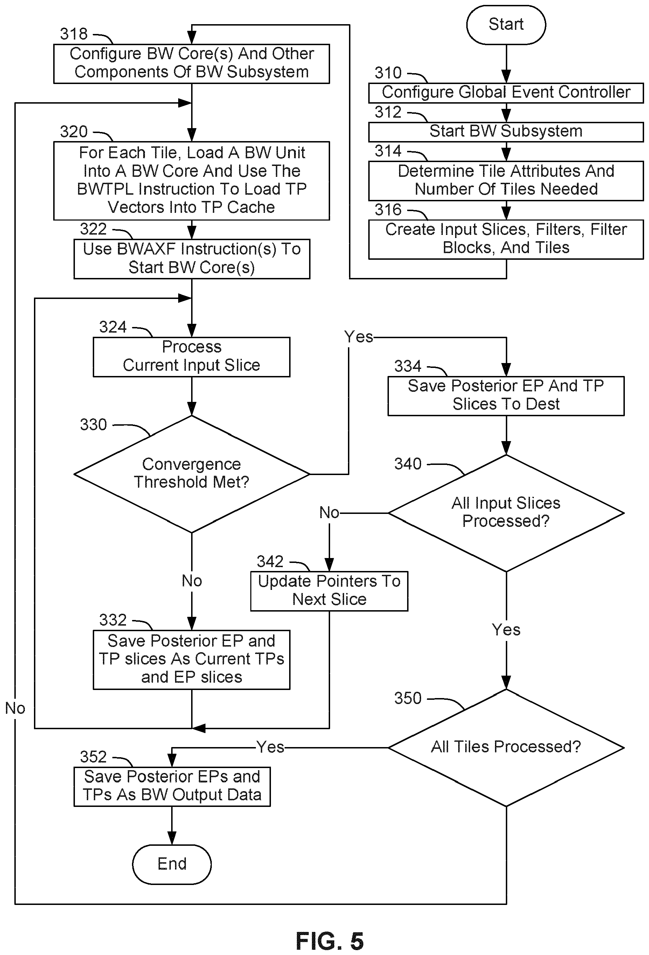

In addition, global event controller 52 supports an instruction for using direct memory access (DMA) to load TP data into the TP cache of the BW cores. For purposes of this disclosure, such an instruction may be referred to as a "Baum-Welch transition-probability load instruction," a "BW TP load instruction," or a "BWTPL instruction." In one embodiment, the BW TP load instruction uses a format with the following instruction ID and parameters:
*BWTPL src1, src2.*
The "src1" parameter points to the base address of the TP data in RAM, and the "src2" parameter identifies the number of TP vectors to be loaded into L1C in the BW core. Further details on the BWTPL instruction are provided below, with regard to the flowchart of Figure 5.

**Figure 5** presents a flowchart of an example embodiment of a process for using BW accelerator 41 to generate maximization parameters for an HMM. That process is discussed below in the context of the hypothetical scenario discussed above, involving tiles 63A and 63B.

The process of Figure 5 starts at block 310 with application 62 configuring global event controller 52 with BW configuration data for the relevant statistical model. For instance, as indicated above, the BW configuration data may specify the potential values or states for observations, the number of potential states, the read size, the convergence threshold, initial EP matrix 210, and initial TP matrix 220, and application 62 may send that BW configuration data (or pointers to that data) to global event controller 52.

As shown at block 312, application 62 may then then start BW subsystem 50. For instance, application 62 may send a start signal to global event controller 52. In response, as shown at block 314, global event controller 52 may determine suitable tile attributes for processing BW input data 64, based on the BW configuration data and the known attributes of BW subsystem 50, such as the number of BW cores and the size of the L1C in each BW core. Those tile attributes may include the number of tiles to be used, the number of input slices to include in each tile, the number of BW input units to include in each input slice, the filter size to be used for each filter in a filter block, and the number of TP vectors to include in each filter. For example, global event controller 52 may determine that each filter should include an EP vector with 4 elements and 4 TP vectors with 4 elements each, for a total of 20 elements, each of which has a predetermined size, such as 2 bits, resulting in a filter size of 80 bits or 10 bytes. Global event controller 52 may then determine how many observations can fit in a BW input unit along with that same number of filters. Global event controller 52 may then divide the read size (i.e., the total number of observations) by the number of observations in a BW input unit to determine the number of input slices to be used. Global event controller 52 may then determine how many tiles to use. For instance, if there are more input slices than cores, global event controller 52 may decide to use at least one tile for each BW core. Global event controller 52 may then determine how many input slices to include in each tile, based on the L1C size and the size of a BW input unit. In the hypothetical scenario, global event controller 52 decides to use two tiles, and to assign three BW input units to each tile (where each BW input unit includes one input slice and one filter block).

Accordingly, as shown at block 316, global event controller 52 then creates those tiles. For instance, global event controller 52 may copy the data for input slices and filter blocks #1-#3 into tile 63A, and global event controller 52 may copy the data for input slices and filter blocks #4-#6 into tile 63B. Alternatively, global event controller 52 may create tiles 63A and 63B by creating one or more tables to indicate where certain components of a tile reside. Accordingly, a table (or a collection of tables) which indicates where the components of a tile reside may also be referred to as a "tile." For instance, as indicated above, a tile may include input slices and filter blocks contain EP vectors and pointers to TP vectors.

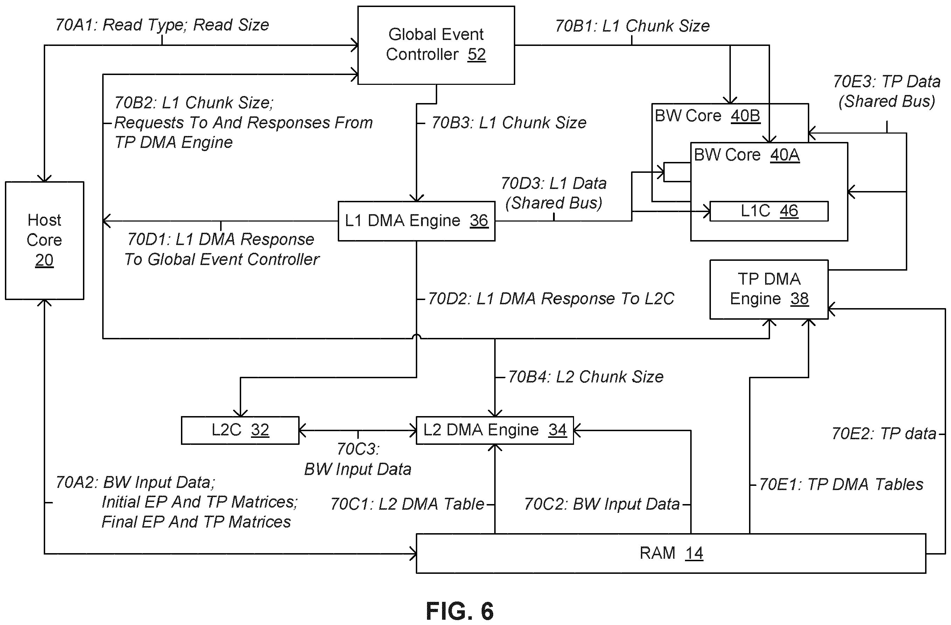

As shown at block 318, global event controller 52 may then configure other components of BW subsystem 50 accordingly. For instance, global event controller 52 may configure BW cores 40A and 40B with configuration data to specify attributes of the data to be loaded into the L1C, such as the read type, the convergence threshold, the number and the values of the potential states/values for an observation, the number of TP vectors in a filter, the number of observations in an input slice, and the relative positions of different items within a BW input unit. For instance, the configuration data may indicate that each BW input unit in L1C will be organized starting with the observations for that BW input unit, followed by the relevant EP vectors, followed by the relevant TP vectors (or pointers to those TP vectors). Also, global event controller 52 may send configuration data to L1 DMA engine 36, L2 DMA engine 34, and TP DMA engine 38, and that configuration data may specify attributes such as the L1 chunk size and the L2 chunk size, as described in greater detail below with regard to Figure 6.

As shown at block 320, global event controller 52 may then populate each core with the data to be processed by that core. For instance, global event controller 52 may load a different tile into the L1C of each of BW core. In particular global event controller 52 may copy the observations, the EP vectors, and the TP vector pointers of a tile to the L1C of the BW core, and global event controller 52 may use the BWTPL instruction to load the actual TP vectors of the tile into the TP cache of that BW core. When global event controller 52 executes the BWTPL instruction, that instruction causes global event controller 52 to use TP DMA engine 38 to load the relevant TP vectors into the TP cache of the relevant BW core.

For instance, when global event controller 52 is preparing BW core 40A to process tile 63A, global event controller 52 may use the BWTPL instruction to load the TP vectors for tile into TP cache 179. For example, in the hypothetical scenario, global event controller 52 may compute the number of TP vectors to be loaded to be 6000, based on (a) the number of filters in the tile (which is 1500 in the hypothetical scenario: 500 per filter block) and (b) the number of TP vectors in each filter (which is 4 in the hypothetical scenario). Consequently, global event controller 52 may execute the BWTPL instruction with "src1" pointing to the base of filter block #1 (see Figure 4), and with "src2" set to 6000. Or, if the filters include pointers to TP vectors, global event controller 52 set the "src1" parameter to point to the address reflected in the first TP-vector pointer in filter block #1.

Also, in one embodiment, the destination (TP cache 179) is fixed, and so a destination address is not required. Thus, global event controller 52 may load tile 63A into BW core 40A, and tile 63B into BW core 40B. In one embodiment, BW subsystem 50 includes various communication paths to support various different types of communications between components during configuration and during execution of the Baum-Welch algorithm.

**Figure 6** is a block diagram with further details on communications within data processing system 10. The arrows in Figure 6 identify different types of communications between different components. Also, different letters in the reference numbers for those arrows denote different endpoints for the corresponding communications. For instance, arrow 70A1 indicates that host core 20 provides global event controller 30 with parameters such as read type and read size for the observations in BW input data 64 (i.e., for the stream of observations to be used as input to the Baum-Welch algorithm), while arrow 70A2 indicates that host core 20 loads items such as BW input data 64 and initial EP and TP matrices 210 and 220 into RAM 14.

Arrow 70B1 indicates that global event controller 52 supplies each of BW cores 40A and 40B with the L1 chunk size. Similarly, arrows 70B2 and 70B3 indicate that global event controller 52 supplies the L1 chunk size to L1 DMA engine 36 and TP DMA engine 38, respectively. Arrow 70B2 also indicates that global event controller 52 sends request to TP DMA engine 38 and received response from TP DMA engine 38. Arrow 70B4 indicates that global event controller 52 supplies L2 DMA engine 34 with the L2 chunk size.

Arrow 70C1 indicates that L2 DMA engine 34 obtains an L2 DMA table from RAM 14. Arrow 70C2 indicates that L2 DMA engine 34 obtains BW input data from RAM 14, and arrow 70C3 indicates that L2 DMA engine 34 sends that data to L2C 32, in connection with loading data into BW cores. L2 DMA engine 34 may use the L2 DMA table to perform address translation in connection with copying BW input data from RAM 14 to L2C 32.

Arrow 70D1 indicates that L1 DMA engine 36 sends responses from some L1 DMA operations (e.g., to indicate events such as command done, operation complete, etc.) to global event controller 39. And arrow 70D2 indicates that L1 DMA engine 36 sends responses from some L1 DMA operations (e.g., to indicate events such as command done, operation complete, etc.) to L2C 32. Arrow 70D3 indicates that L1 DMA engine 36 sends data to L1C in the BW cores via a shared bus.

Arrow 70E1 indicates that TP DMA engine 38 obtains TP DMA tables from RAM 14. Arrows 70E2 and 70E3 indicate that TP DMA engine 38 uses the TP DMA tables to load TP data from RAM 14 into the BW cores, with TP DMA engine 38 using a shared bus to access the BW cores. In one embodiment, RAM 14 includes one TP DMA table for each BW core.

In addition, arrow 70A2 also indicates that host core 20 obtains the final EP and TP matrices from RAM after the BW subsystem 50 has completed the Baum-Welch algorithm.

Furthermore, global event controller 39 may send synchronization signals (e.g., start and stop signals) to various components to coordinate or synchronize activities. For instance, global event controller 39 may send a synchronization signal (e.g., a start acknowledgment or "ack") to host core 20 to indicate that global event controller 39 has taken over system execution in response to host core 20 transferring control to global event controller 39, as shown at block 312 of Figure 5. And global event controller 39 may send a different synchronization signal (e.g., a start pulse) to components such as the BW cores and the DMA engines to cause those components to start their operations within the system. For instance, global event controller 52 may send a start signal to TP DMA engine 38 after sending a BWTPL instruction to TP DMA engine 38, and global event controller 52 may send a start signal to a BW core after sending a BWAXF instruction to that BW core. Similarly, global event controller 52 may send a start signal to L1 DMA engine 36 after sending parameters for loading a block of data (e.g., an input slice) into a BW core, and in response to that signal, L1 DMA engine 36 may read the L1 DMA table from RAM 14, and L1 DMA engine 36 may then load the specified data into the specified BW core.

Also, transactions may be sequential, with L1 DMA engine 36 filling the data for one BW core into the L1C of that BW core and then filling the data for another BW core into the L1C for that BW core. L1 DMA engine 36 may also update the L1 DMA table accordingly. Also, TP DMA engine 38 may load TP vectors into cores sequentially, filling the data for one BW core into the TP cache of that BW core and then filling the data for another BW core into the TP cache for that BW core.

Referring again to Figure 5, as shown at block 322, after global event controller 52 configures the BW cores and the other components of BW subsystem 50, global event controller 52 may then trigger initiation of the Baum-Welch algorithm by sending a BWAXF instruction to each BW core that is supposed to be involved. In particular, in the hypothetical scenario, global event controller 52 sends a first BWAXF instruction to BW core 40A, to cause BW core 40A to process tile 63A, and a second BWAXF instruction to BW core 40B, to cause BW core 40B to process tile 63B. Global event controller 52 may also send corresponding start signals to BW cores 40A and 40B.

As shown at block 324, each BW core may then process its current input slice, as described in greater detail below. As shown at block 330, after a BW core has generated posterior EP and TP slices, the BW core may determine whether the convergence threshold has been met. If it has not been met, the BW core may save the posterior EP and TP slices from that iteration to be used as the current EP and TP slices for the next iteration, as shown at block 332, and the process may return to block 324 with the BW core performing another iteration of the Baum-Welch algorithm.

As shown at block 334, once the convergence threshold has been met, the BW core may save the posterior EP and TP slices to the L1C according to the specified "dest" parameter. (Eventually, once all tiles for a BW core have been processed, global event controller 52 will copy the final EP and TP slices from L1C to RAM 14.)

As shown at block 340, the BW core may then determine whether the tile includes any more input slices to process. If all input slices have not been processed, the BW core may then update all relevant pointers and such to address the next input slice, as shown at block 342, and the process may return to block 324 for the BW core to process that next slice.

Once all input slices have been processed, the BW core may send a completed signal to global event controller 52, and global event controller 52 may determine whether all of the tiles for that BW core have been processed, as shown at block 350. If any tiles remain to be processed, the process may return to block 320, with global event controller 52 loading a new tile into the BW core, for processing as described above. Once all tiles have been processed, global event controller 52 may save the posterior EP and TP matrices to RAM 14 to constitute BW output data 66. Thus, BW output data 66 will contain final EP matrix 212 and final TP matrix 222, as shown in Figure 2.

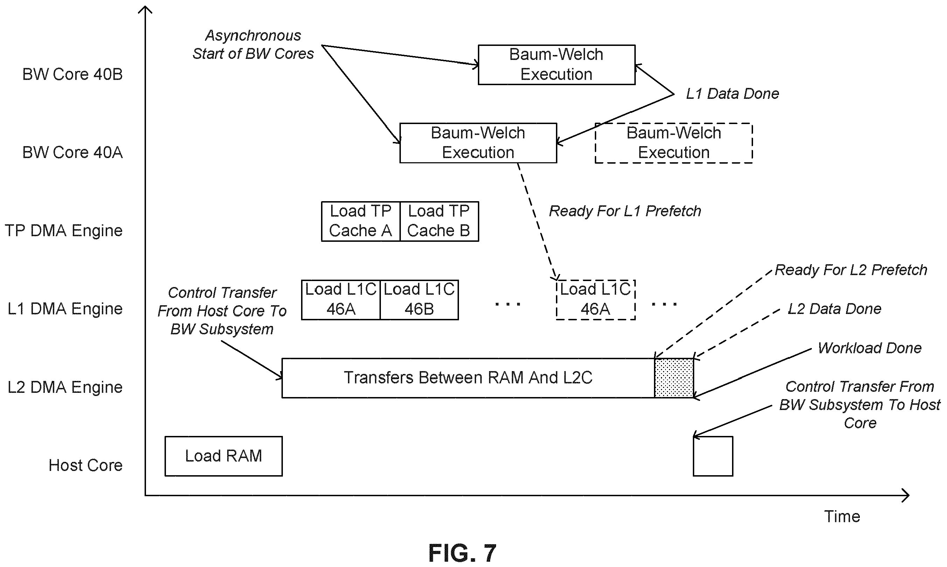

Figure 7 presents a flow diagram to illustrate parallel operations and other operations within data processing system 10, according to the hypothetical scenario discussed above. In other words, Figure 7 depicts execution flow. In particular, in Figure 7, the horizontal axis reflects the passage of time, the vertical axis provides different rows for different components of data processing system, and items or operations in those rows are aligned vertically to reflect when those items are operations become active and inactive (or start and stop). Also, TP cache 179 is shown as TP cache A, and the TP cache in BW core 40B is shown as TP cache B. Also, Figure 7 focuses primarily on the hypothetical scenario discussed above, with the "Baum-Welch Execution" blocks reflecting the processing of one tile per BW core. However, Figure 7 also include a "Baum-Welch Execution" block with dashed outlines, to reflect an alternative scenario involving the execution of a second tile by BW core 40A.

The operations in Figure 7 start with host core 20 loading BW input data 64 into RAM 14. Host core 20A then transfers control to BW subsystem 50. Global event controller 52 then issues DMA requests across various memory hierarchies, including (a) requests to load data into L2C 32 as necessary, (b) requests to copy data from L2C 32 into L1C 46A or L1C 46B, and (c) requests to copy data into TP cache A and TP cache B. As illustrated, BW subsystem 50 may process transfers into different L1Cs sequentially, and BW subsystem 50 may process transfers into different TP caches sequentially. Also, global event controller 52 may start each BW core asynchronously, once the relevant data has been copied into the L1C and the TP cache for that BW core. Also, as illustrated, multiple BW cores may execute the Baum-Welch algorithm in parallel.

Also, as a BW core processes input slices within a tile, the BW core may fetch slice-by-slice data from the L1C. And if a BW core is to execute multiple tiles, BW subsystem 50 may use prefetching to start loading the data for the next tile into the L1C of that BW core before the BW core has finished the current tile, as indicated by the dashed line labeled "Prefetch For BW Core 40A." For instance, in one embodiment or scenario, once the last input slice is executing, halfway through the execution of that slice, the BW core may set a flag (e.g., a "ready-for-Ll-prefetch flag") to indicate that the current tile is about to finish. Global event controller 52 may then automatically detect that that flag has been set, and in response, global event controller 52 may trigger DMA engines to fetch the data for the next tile from L2C 32 to the L1C in the BW core. However, if there may be multiple iterations of the BW algorithm, the BW core may delay setting the ready-for-prefetch flag until the maximization parameters have converged as required by the predetermined convergence threshold, as described above.

Also, if a BW core is to execute multiple tiles, but all of those tiles do not fit into L2C 32, global event controller 52 may prefetch data from RAM 14 to L2C 32, as indicated by the dashed line labeled "Ready For L2 Prefetch." In one embodiment, BW subsystem 50 uses basically the same approach as for prefetch to L1C, except global event controller 52 initiates such a prefetch in response to a BW core (or some other component of BW subsystem 50) setting another hardware flag (e.g., a "ready-for-L2-prefetch flag") to indicate that a BW core has started processing the last tile that currently resides in L2C 32. Since all of the tile data from L2C 32 will have been copied to L1C, global event controller 52 responds to that flag by copying one or more additional tiles from RAM 14 to L2C 32. As indicated by the dashed line labeled "L2 Data Done," that prefetch may complete before a core is ready for a new tile, thereby enhancing the efficiency of BW subsystem 50.

Once all BW cores have finished processing all of their respective tiles, global event controller 52 sends a completion signal to host core 20 and releases control to host core 20.

Microarchitecture Overview

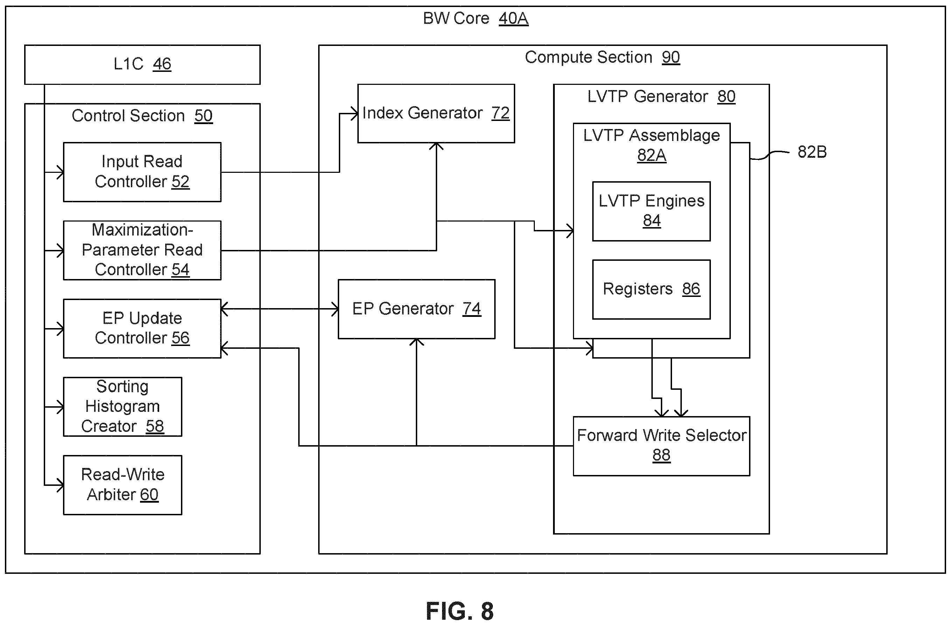

**Figures 8-12** present microarchitectural details for BW core 40A. BW core 40B may have the same kinds of details.

**Figure 8** is a block diagram with further details for BW core 40A. In particular, Figure 8 shows certain operating units of BW core 40A from a relatively high-level perspective. As illustrated, those operating units may be organized into two major sections: a control section 50 and a compute section 90. Control section 50 and compute section 90 may be implement using respective hardware circuits. Control section 50 is mainly responsible for issuing both memory requests and proper commands to compute section 90, to configure compute section 90 for appropriate operations (e.g., forward computations).

Compute section 90 is responsible for performing fundamental compute operations based on the configuration set by control section 50. For instance, compute section 90 reads the appropriate data passed by control section 50 and operates on that data. In particular, compute section 90 generates likelihood values (LVs) and TPs.

Compute section 90 contains various hardware circuits or blocks. One of those major blocks or circuits is an EP generator 74. Another other major block or circuit is a likelihood-value-and-transition-probability (LVTP) generator 80. Compute section 90 also contains circuitry for an index generator 72. An LVTP generator includes circuitry for generating LVs (i.e., forward values and backward values) and TPs. In the embodiment of Figure 8, that circuitry includes two LVTP assemblages 82A-82B. However, in other embodiments, an LVTP generator may include more than two LVTP assemblages. For instance, an LVTP generator may include 128 or more LVTP assemblages, and some or all of those LVTP assemblages may work in parallel to compute FVs, BVs, EPs, and TPs for different elements or nodes at different sequence positions within the set of observations.

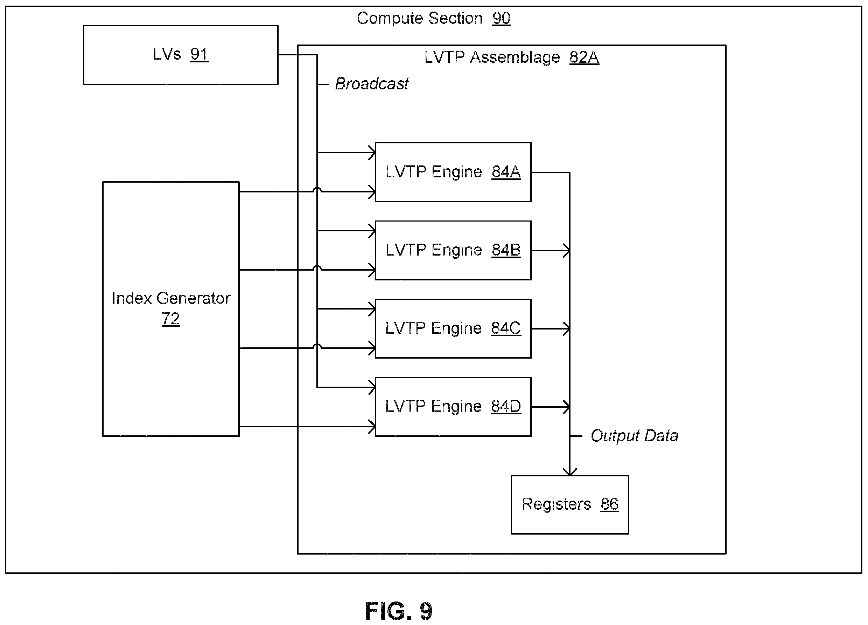

Each LVTP assemblage (e.g., LVTP assemblage 82A) includes a set of registers 86 and multiple LVTP engines 84. In particular, in one embodiment, each LVTP assemblage includes four LVTP engines (LVTP engines 84A-84D), as shown in Figure 9. When BW core 40A is called to process an input slice, BW core 40A may automatically split that input slice into multiple sections and use one LVTP assemblage 82A to process each of those sections. For instance, if an input slice contains 400 observations and there are 40 LVTP assemblages, BW core 40A may automatically split the slice into 40 sections (e.g., with 10 observations per section), and BW core 40A may use one LVTP assemblage to process each section. Also, the four LVTP engines in an LVTP assemblage may process consecutive observations. For instance, LVTP engine 84A may process the first observation, LVTP engine 84B may process the second observation, etc. And then LVTP engine 84A may process the fifth observation, etc.

Also, as indicated below with regard to Figure 9, each LVTP assemblage 82A may include a set of registers 86. And each LVTP engine may generate an LV for each observation processed by that LVTP engine. Registers 86 may be used to consolidate the four LVs from the four LVTP engines into a line. In one embodiment, LVTP assemblage 82A uses registers 86 to consolidate four 32-bit values into a 128 bit line.

Further details on an LVTP engine are provided below, with regard to Figure 9. Also, as shown in Figure 10, each LVTP engine may include an LV generator and a TP generator.

Also, LVTP generator 80 includes a forward write selector 88 that receives output from each of the LVTP assemblages, saves that output to L1C 46A, and decides (based on whether an LVTP assemblage is in an FV-generation mode or a BV-generation mode) whether to forward that output to TP generators for further processing.

In one embodiment, control section 50 includes hardware circuitry or logic blocks to oversee the execution of six primary steps. In step 1, an input read controller 52 issues a read request to L1C 46A to obtain the input data for the current slice from L1C 46A. That input data may include, for instance, the observations for the current input slice. In step 2, a maximization-parameter read controller 54 issues a read request to L1C 46A to obtain the maximization parameters for the current iteration of the Baum-Welch algorithm from the initial/previous iteration of the Baum-Welch algorithm, based on the type of current execution phase (where the type is either forward computation phase or backward computation phase). Thus, BW core 40A may use the posterior EP and TP vectors from the previous iteration as the current EP and TP vectors for the current iteration. Such an iteration of the Baum-Welch algorithm may be referred to as a "timestamp." Thus, a BW core may use posterior vectors from one timestamp as current vectors in the next timestamp. In step 3, an EP update controller 56 controls the phase of updating EPs in cooperation with EP generator 74.

In step 4, a sorting histogram creator 58 collects the write requests from various components within BW core 40A and avoids any duplicate requests to L1C 46A. For purposes of this disclosure, a component of a BW core that issues write requests to the L1C of that BW core may be referred to as a "write client," and one that issues read requests may be referred to as a "read client." In step 5 a read/write arbiter 60 arbitrates among the read and write clients. For instance, EP generator 74 and LVTP generator 80 may issue read or write requests at substantially the same time, and read/write arbiter 60 arbitrates the requests from those clients. In step 6, read/write arbiter 60 pipelines the read and write requests to L1C 46.

**Figure 9** is a block diagram with further details on compute section 90 from BW core 40A. In particular, Figure 9 focuses primarily on LVTP assemblage 82A, showing that LVTP engines 84 include 4 LVTP engines 84A-84D, with each LVTP engine receiving LVs 91 from L1C 46A and index values from index generator 72. For instance, in one embodiment, components like L1C 46A and TP cache 179 have a line size of 128 bits (or 16 bytes). Also, items like LVs in L1C 46A and numerators and denominators in TP cache 179 have a size of 4 bytes. Consequently, a single read returns four consecutive values. Accordingly, when LVTP assemblage 82A reads LVs from L1C 46A, it receives four consecutive LV. Furthermore, each LVTP assemblage and all of the LVs that have been read to each of the LVTP engines in each of the LVTP assemblages. Each LVTP engine may then use some or all of those LV in the process for generating the current LV for that engine.

Also, index generator 72 generates four consecutive i's and/or four consecutive j's, with one of those i's and/or one of those j's being sent to each LVTP engine in LVTP assemblage 82A. Based on the LVs and the indexes from index generator 72, each of those LVTP engines then generates output data and saves that data to registers 86, to L1C 46A, and/or to TP cache 179, as described in greater detail below with regard to Figure 10. Index generator 72 also generates indexes for the LVTP engines in the other LVTP assemblages, and each of those LVTP engines works like LVTP engine 84A to generate output for its assigned observation.

**Figure 10** is a block diagram with further details on LVTP engine 84A. As indicated above, in one embodiment, each LVTP assemblage includes 4 LVTP engines. LVTP engine 84A is described in greater detail below. LVTP engines 84B-D may include the same or similar details. The main components of LVTP engine 84A are an LV generator 150 and a TP generator 170. A TP generator may also be referred to as a transition pipeline. Also, 86, L1C 46A, and forward write selector 88 are shown with dashed lines to denote that those components reside outside of LVTP engine 910.

LV generator 150 performs the operations to generate FVs and BVs according to the Baum-Welch algorithm (e.g., according to Equations 1 and 2, respectively). When LVTP assemblage 82A is in FV-generation mode, LV generator 150 computes FVs in sequence, such that each FV is linked with every state that can be addressed with i and j indexes. For example, the FV of the "jth" state from the "ith" state can be addressed with the index "i,j".

In one embodiment, to start the Baum-Welch algorithm, control section 50 sets all LVTP assemblage 82A to FV-generation mode. The LVTP engines then operate in parallel as described below to generate FV matrix 230. Then, control section 50 sets all LVTP assemblages to BV-generation mode. The LVTP engines operate in parallel to generate BV matrix 240, final EP matrix 212, and final TP matrix 222, as described in greater detail below.

As shown, when generating LVs, LVTP engine 84A obtains LVs and so-called "transition $*$ emission probabilities" as input, and LVTP engine 84A generates a computed LV as output. (For purposes of this disclosure, a transition $*$ emission probability may also be referred to as a "(T*E) probability" or simply as a "T*E".) Depending on the mode of operation of LVTP engine 84A (i.e., FV-generation mode or BV-generation mode), those LVs are either FVs or BVs. LV generator 150 may send a computed LV to forward write selector 88. Forward write selector 88 may then save that LV to L1C 46A, as per the src3-F parameter, and as per the current i and j indexes from index generator 72. In addition, if the LV is a BV, forward write selector 88 may send that BV directly to TP generator 170 for immediate consumption for generating TPs.

With regard to the LVs, in one embodiment, LV generator 150 reads LVs that have already been computed from L1C 46A, based on i and j index values from index generator 72. LV generator 150 also obtains corresponding T*E values from TP generator 170. In particular, TP generator 170 may save a set of T*E values to registers 86, as described in greater detail below, and LV generator 150 may read that set of T*E values from registers 86. Circuitry within LV generator 150 then generates a new "computed LV" based on that input data (e.g., in accordance with Equation (1) or (2), depending on whether LVTP engine 84A is in FV generation mode or BV generation mode). In particular, that circuitry may continue to "spin" and process as many different T*Es and LVs as necessary to generate the new LV for the target observation (i.e., for the observation assigned to that LVTP engine).

In one embodiment or scenario, the circuitry in LV generator 150 for generating LVs includes a dot-product tree 152, an accumulator 154, and a reduction tree 156. Also, when LV generator 150 obtains LVs, it reads a line of LVs from L1C 46A, based on i and j index values from index generator 72. That line contains four consecutive 32-bit LVs. And when LV generator 150 obtains the T*Es that correspond to those LVs, it obtains them from registers 86, as indicated above. LV generator 150 then treats each LV and corresponding T*E as a pair, using dot-product tree 152 to multiply the values in each pair. In one embodiment, dot-product tree 152 performs the dot-product operation on four pairs of single-precision floating-point ("FP32") variables, to produce one scalar value (e.g., one FP32 value) as output. (BW core 40a may handle FP23 variables according to an Institute of Electrical and Electronics Engineers (IEEE) standard such as the IEEE 754 Standard for Floating-Point Arithmetic, as published on July 22, 2019, as IEEE 754-2019.) Accumulator 154 receives and accumulates the output from dot-product tree 152. Also, accumulator may use multiple channels to accumulate that output. Reduction tree 156 receives the output from all of those channels and reduces it to generate single scalar output. That output will be an LV (either an FV or a BV). Accordingly, it is illustrated in Figure 10 as a "Computed LV."

In particular, LV generator 150 sends computed LV to forward write selector 88. If the LV is a BV, forward write selector 88 saves that FV to L1C 46A, as per the src3-F parameter, and as per the current i and j indexes from index generator 72. However, if the LV is a BV, forward write selector 88 sends that BV directly to TP generator 170 for immediate consumption for generating TPs.

TP generator 170 performs the operations to update the TPs according to the Baum-Welch algorithm (e.g., according to Equation 3). As indicated above, transition-probability generator 170 includes TP cache 179, which is a local memory to store TPs. In particular, TPs are stored as TP numerators and TP denominators. (Similarly, EPs are stored as EP numerators and EP denominators.)

TP generator 170 also computes T*E values to be used by LV generator 150. To start, TP generator 170 reads the current EP from L1C 46A based on the i and j indexes from index generator 72. TP generator 170 also generates an appropriate address for the current transition numerator, based on those indexes. TP generator 170 then uses that address to read the current transition numerator from TP cache 179.

Multiplier 172 takes the current transition numerator and the current EP and computes the T*E from those values. TP generator 170 then stores the result registers 86, for use by LV generator 150 to determine LVs.

Also, TP generator 170 includes a multiplier 178, an adder 176, and a multiplexer 177. Multiplier 178 helps to compute the numerator for the transition probability (e.g., in accordance with equation (3)). In particular, multiplier 178 reads the current FV from L1C 46A, and multiplier 178 receives the computed BV directly from LV generator 150 (via forward write selector 88). Multiplier 178 multiplies those two input values and then forwards the result to adder 176. Adder 176 also obtains the previous numerator values from TP cache 179. Adder 176 then adds the updated transition numerator to the current transition numerator (e.g., as per the summation parts of Equation (3) to generate the posterior transition numerator, which adder 176 sends to multiplexer 177. Multiplexer 177 then saves the posterior transition numerator to TP cache 179.

Also, the numerator formula and the denominator formula in equation (3) are almost identical, and TP generator 170 handles the difference by using a hardware flag to indicate when the denominator or the numerator is done. Consequently, components in TP generator 170 carry on with the operations for the unfinished value until it is finished.

TP generator 170 also includes a floating-point (FP) division pipe 174 that is capable of handling four single-precision floating-point divisions. For instance, FP division pipe 174 may include four division pipelines working in parallel. Also, when FP division pipe 174 reads from TP cache 179, that read operation returns 128 bits of data, containing four FP32 values. Accordingly, one divisor/denominator read returns four divisors, and one dividend/numerator read returns four dividends. FP division pipe 174 may then perform FP32 division on all four dividend-divisor pairs in parallel.

In addition, multiplexer 177 selects either the output of FP division pipe 174 or the output of adder 176, to be stored as a previous value in TP cache 179, to subsequently be used to carry out the summation parts in equation (3). However, if the numerator or denominator values are not both ready in TP cache 179, FP division pipe 174 will not be enabled.

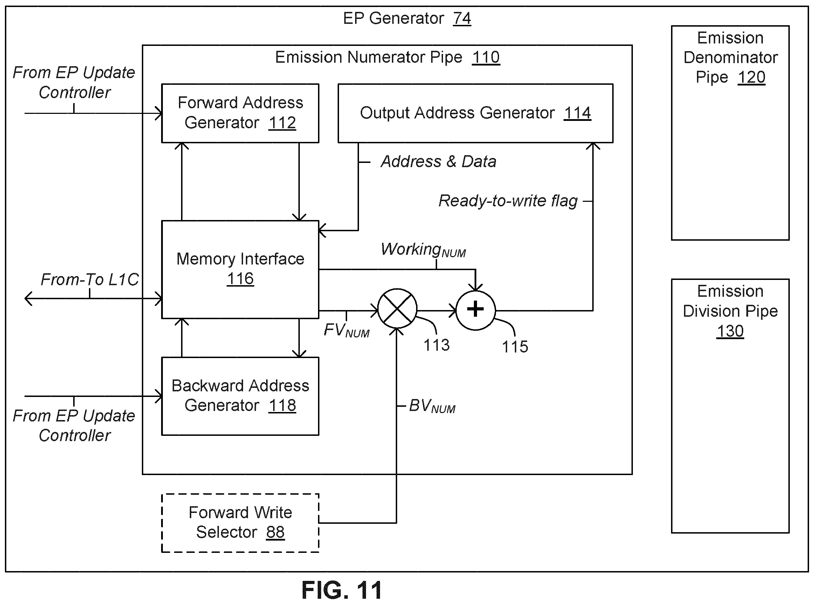

**Figure 11** is a block diagram with further details on EP generator 74. As illustrated, EP generator 74 includes three smaller blocks: an emission numerator pipe 110, an emission denominator pipe 120, and an emission division pipe 130. EP generator 74 may use those blocks to generate EPs (e.g., according to Equation 4).

As shown, emission numerator pipe 110 includes a memory interface 116, a forward-address generator 112, a backward address generator 118, an output-address generator 114, a multiplier 113, and an adder or incrementor 115. To generate a posterior EP numerator for an observation at a target location "X" in the current input slice, emission numerator pipe 110 needs to sum the current FV numerators and the current BV numerators for all locations from location 1 to target location X. Consequently, forward-address generator 112 gets the base address (in L1C 46A) for the first FV numerator in the current slice from EP update controller 56. Likewise, backward-address generator 118 also gets the base address for the first BV numerator in the current slice from EP update controller 56. Forward-address generator 112 and backward address generator 118 then use those base addresses to generate the appropriate addresses to read the first forward numerator ("FV$_{NUM}$") and the first backward numerator ("BV$_{NUM}$") from L1C 46A, via memory interface 116.

Multiplier 113 then multiplies those two values and sends the resulting "working numerator" to adder 115. Emission numerator pipe 110 also saves the working numerator to L1C, to reside in the location that will eventually hold the final result. Emission numerator pipe 110 may use output address generator 110 and memory interface 116 to determine that address and to perform the write.

Forward-address generator 112 and backward-address generator 112 may then increment the read address and read the next forward numerator and the next backward numerator from L1C. Multiplier 113 then multiplies those two values and sends the resulting "new numerator" to adder 115. Adder 115 then reads the working numerator "Working$_{NUM}$" from L1C 46A and adds the new numerator to it. Emission numerator pipe 110 then saves the new working numerator to L1C, to reside in the location that will eventually hold the final result. This process may continue until emission numerator pipe 110 has finished processing the current numerators at target location X and has written the resulting working numerator to L1C 46A. That value will then be the posterior EP numerator.

Emission denominator pipe 120 may have the same design or a similar design as emission numerator pipe 110. However, in addition to generating emission denominators, emission denominator pipe 120 also generates transition denominators. To generate a TP denominator, emission denominator pipe 120 uses a process similar the one described above. But when emission denominator pipe 120 has finished computing the denominator for position X-1, emission division pipe 130 saves that denominator to TP cache 179 as the posterior TP denominator. Emission division pipe 130 then runs the process for position X, and saves the resulting denominator to L1C as the posterior EP denominator.

Also, EP generator 74 computes numerators and denominators independently of each other, in parallel.

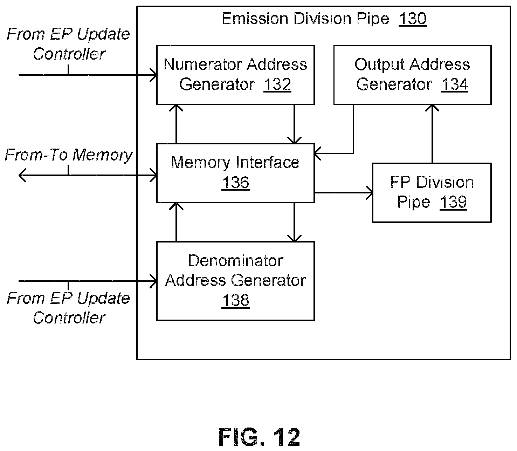

**Figure 12** is a block diagram with further details on emission division pipe 130. As shown, emission division pipe 130 includes a memory interface 136, a numerator address generator 132, and denominator address generator 138, an output address generator 134, and an FP division pipe 139. To generate an EP for a target location "X", emission division pipe 130 uses numerator address generator 132 and denominator address generator 138 to determine the addresses of the numerator and denominator for location X, and emission division pipe 130 uses memory interface 136 to read those values from L1C 46A.

FP division pipe 139 then divides the numerator by the denominator and sends the resulting EP to output address generator 134, which determines the proper location in L1C for saving that EP. Memory interface 136 then write that EP to that location, to serve as the posterior EP.

Furthermore, when components such as emission division pipe 130, emission numerator pipe 110, emission denominator pipe 120, and TP generator 170 generate values such as TPs, EPs, EP denominators, etc., those values may actually include a set or vector of values, with a different value for each potential observation state. For instance, if there are four potential observation states, BW subsystem 50 saves a set or vector of four probabilities for the items such as posterior EPs, posterior TPs, etc.

In addition, the BW subsystem described herein is very flexible, in that it allows applications to specify numerous different parameters, including the number of potential observation states.

The disclosed BW subsystem is also efficient with regard to execution time, since the BV stage, the EP update stage, and the TP update stage all work in parallel after the completion of the FV stage. Furthermore, BV data from the LV generator is captured and used directly in the EP update and TP update stages. Also, FVs are read from L1C, where they were stored prior to execution of the other stages. And EP update and TP update read FVs from L1C, thereby avoid costly access to RAM.

One advantage of making the BV data easily available within the BW subsystem is that doing do enables the BW subsystem to avoid redundant computations, such as multiplications. In addition, making the BV data easily available within the BW subsystem reduces the communication bandwidth needed between BW cores and other components, relative to other approaches. For instance, the present approach makes BV data available to the TP update stage without the TP update stage needing to recompute the BV data or retrieve the BV data from RAM.

And the present teaching further enhance bandwidth efficiency by providing for a TP cache in the BW core to save TPs. Consequently, no external bandwidth is needed to read those values.

The present teaching also enable the BW subsystem to begin updating TPs and EPs while the BV stage is still in progress, by using the data generated during the BV stage as that data becomes available. This approach may be referred to as "the partial compute approach." By contrast, other approaches may begin updating EPs and TPs only after the FV and BV stages are complete.

The partial compute approach may decrease the overall memory access and storage requirements and may increase the parallelism and reduce the execution time of the Baum-Welch algorithm relative to other approaches, yet without increasing utilization of compute resources outside of the BW subsystem.

T*E Look-Up Table

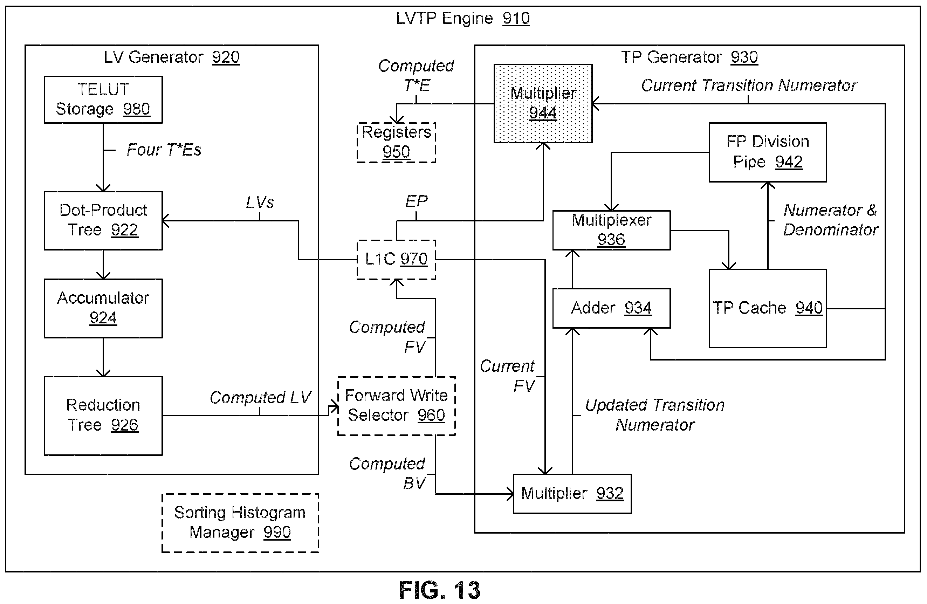

**Figure 13** is a block diagram with details on an alternative embodiment of a BW accelerator. In particular, Figure 13 focuses primarily on an LVTP engine 910 with features for efficiently processing observations according to a profile hidden Markov model (PHMM). Observations in the field of biology, for example, may be suitable for processing according to a PHMM.

In one embodiment or scenario, LVTP engine 910 resides in a BW accelerator in a data processing system that includes the same kinds of components as data processing system 10, except for changes to certain aspects of the LVTP engine and certain aspects of the control section of the BW core. In the embodiment of Figure 13, LVTP engine 910 includes features that enable the BW accelerator 41 to efficiently analyze observations according to a PHMM. In particular, LVTP engine 910 may be configured with a PHMM that uses a maximum of 36 elements for T*E values. For purposes of this disclosure, such a PHMM may be referred to as a "generic PHMM." Accordingly, a BW subsystem, a BW accelerator, and a BW core with features like those in Figure 13 may be referred to, respectively, as a "generic BW subsystem," a "generic BW accelerator," and a "generic BW core."

As shown, in LVTP engine 910 includes an LV generator 920 and a TP generator 930. Like LV generator 150, LV generator 920 includes a dot-product tree 922, an accumulator 924, and a reduction tree 926. However, unlike LV generator 150, LV generator 920 also includes T*E look-up tables (TELUTs) stored in TELUT storage 980. LV generator 920 may operate like LV generator 920 150, except that, when the TELUTs are enabled, rather than obtain T*Es from the TP generator via registers, dot-product tree 922 obtains T*Es from the TELUTs in TELUT storage 980. In particular, when the TELUTs are enabled, LV generator 920 uses the i and j indexes from the index generator to determine the TELUT cell or cells to read from TELUT storage 980 to obtain the current T*E value or values.

One TELUT is utilized per multiplier in dot-product tree 922. Consequently, TELUT storage 980 in Figure 13 contains four TELUTs, with one value from each of those tables feeding into dot-product tree 922. Also, in one embodiment or scenario, each of those four TELUTs is organized as a 1 x 36 table, with each combination of i,j being mapped into an entry or cell. Before LVTP engine 910 starts processing observations, the global event controller may load TELUTs with with appropriate values into TELUT storage 980.

In one embodiment or scenario, the TELUTs in TELUT storage 980 capture all possible combinations of preset (i.e., initial) transition and emission probabilities. The products of every combination of initial transition and emission probabilities are stored in LUTs because these computations are redundant across many timestamps, and the product is a common parameter in both forward and backward computation of the Baum-Welch algorithm.

Like TP generator 170, TP generator 930 includes a multiplier 932, an adder 934, a multiplexer 936, a TP cache 940, an FP division pipe 942, and a multiplier 944. However, when the TELUTs are enabled, multiplier 944 may be disabled or not used. Consequently, multiplier 944 is shown with dotted fill.

Since a TELUT can hold up to 36 LUT entries, LVTP engine 910 may be used effectively and efficiently with any application that can fit within 36 entries for distinct combination of transition and emission probabilities. However, for other types of applications, TELUTs (or TELUT storage 980) may be disabled, LV generator 920 may obtain computed T*E values from TP generator 930, transition probabilities may be read from the TP cache to perform the multiplication, and TP generator 930 may read emission probabilities from L1C.

TELUT storage 980 and the TELUTs therein enable TP generator 930 to avoid redundant multiplications of transition and emission probabilities. In one embodiment or scenario, by using the TELUTs in TELUT storage 980, LVTP engine 910 realizes a processing bandwidth reduction up to 66% per LVTP engine 910. For instance, TP generator 930 may avoid about 100 million multiplications in the forward phases and 61million multiplications in the backward phase, when the read length is about 650 bases.

In Figure 13, registers 950, L1C 970, and forward write selector 960 are shown with dashed lines to denote that those components reside outside of LVTP engine 910. As indicated above, those components may be the same kinds of components as discussed with regard to data processing system 10.

Sorting And Filtering LVs

Also, the control section of the BW core may include a sorting histogram manager 990 which uses a histogram-based sorting mechanism to decide whether a forward or backward value of a state needs to be computed. In some applications, sorting may enable greatly reducing (i.e., filtering) the number of states that need to be computed at each timestamp without reducing the accuracy of the Baum-Welch algorithm.

In general, when sorting and filtering is enabled, sorting histogram manager 990 sorts the FVs and BVs, and then sorting histogram manager 990 discards the values below a certain threshold to reduce computation requirements, since those values would not contribute significantly to the outcome. In particular, if sorting is enabled, sorting histogram manager 990 compares each write value (e.g., a forward value Ft(i)) to sixteen predefined thresholds values to count the number write values that fall below a threshold value. In one embodiment, or scenario, sorting histogram manager 990 divides the entire range for a single-precision floating-point number into sixteen equal parts (e.g., each group range is 4.25E+37), and sorting histogram manager 990 determines which range or threshold probability value would filter out a threshold number of writes. In other words, sorting histogram manager 990 uses a probability-value threshold and a write-count threshold to filter out writes.

For example, if the FV matrix includes 10,000 FVs, sorting histogram manager 990 sorts those FVs sorts these 10,000 values in descending order and then determines which probability-value threshold could be used to reduce the number of values to no more than the write-count threshold. For instance, if the write-count threshold is 1000 writes or 10% of writes, sorting histogram manager 990 determines which probability-value threshold could be used to reduce the number of writes that are to be processed to 1000. Then, during the next timestamp, sorting histogram manager 990 filters out all writes that fall below the computed probability-value threshold. Consequently, the overall execution will be performed using 1000 FVs instead of 10,000 FVs. For some applications (e.g., applications for polishing genomes), this kind of approximation will not impact the overall accuracy of the Baum-Welch algorithm.

In addition, sorting histogram manager 990 is configurable to vary the threshold values for each group as required. The count of states that exceeds a certain threshold value enables sorting histogram manager 990 to pick a certain threshold value to efficiently discard states that fall under the chosen threshold value in the next timestamp.

Converting a Standard PHMM to a Generic PHMM

It is theoretically possible to convert any standard PHMM into a generic PHMMs, although it may not always be practical, for accuracy or computational resource purposes. For purposes of discussion, a "standard HMM" is denoted by "G1(V1, A1)" and a "generic PHMM" is denoted by "G(V, A)". Also, it is assumed that both graphs are constructed to represent the same single sequence "$S_G$" with length "$N = n_{S_G}$", and to have source state "$v_0$" and sink state "$v_{N+1}$" where they are located at the very beginning and end of the graph. It is also assumed that there is an input sequence "S" to use either in a training or an inference step. Matching states in both standard and generic PHMMs perform match and substitution events identically. Based on these assumptions, it can be shown that generic PHMMs can both (a) insert as many characters as a standard PHMM can insert (b) delete as many characters as a standard PHMM can delete, to prove that a generic PHMM does not have any theoretical limitations when considering the combinations of modifications that a generic PHMM can do compared to a standard PHMM.

First, it is claimed that the maximum number of characters that a standard PHMM can insert in between two characters $S_G[t]$ and $S_G[t + 1]$ is ns. This claim is proved by the following lemma: the insertion state $v_t^{l,1}$ can never be visited as much as ns + 1. This is known because visiting an insertion state, $v_t^{l,1}$, consumes a character (i.e., emits) from the input sequence S. Thus, it is only possible to visit $v_t^{l,1}$ no more than ns times. Thus, it has been shown that a generic PHMM can insert as many characters as a standard PHMM can insert, if the maximum insertion states parameter is set as $l = n_s$.

Second, it is claimed that the maximum number of characters that a standard PHMM can delete from SG is $n_{SG}$. This claim is proved by the following lemma: there are no more than $n_{SG}$ deletion states in a standard PHMM because (a) there are only as many deletion states as matching states and (b) there is only a single matching state for each character in SG. Thus, there cannot be more deletion states than $n_{SG}$. Therefore it is impossible to delete more than $n_{SG}$ characters. A generic PHMM can delete as many characters as a standard pHMM can delete if $P(\alpha_{0,j}) > 0$ V $1 < j \leq N$.

Nevertheless, there are practical limitations when implementing a generic PHMM with a generic BW accelerator.

Additional Embodiments

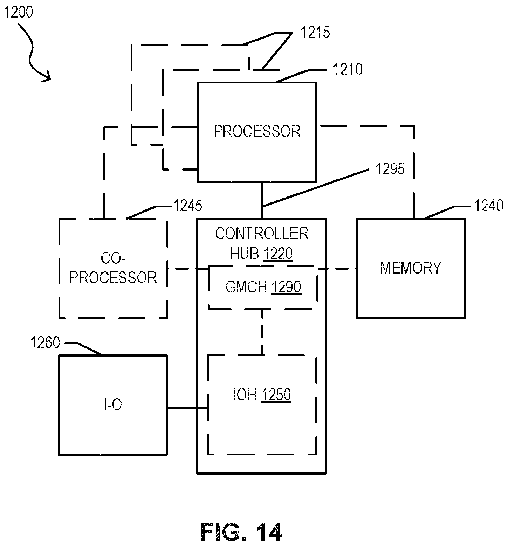

**Figure 14** is a block diagram of a system 1200 according to one or more embodiments. The system 1200 may include one or more processors 1210, 1215, which are coupled to a controller hub 1220. In one embodiment, the controller hub 1220 includes a graphics memory controller hub (GMCH) 1290 and an Input/Output Hub (IOH) 1250 (which may be on separate chips); the GMCH 1290 includes a memory controller to control operations within a coupled memory and a graphics controller to which are coupled memory 1240 and a coprocessor 1245; the IOH 1250 couples input/output (I/O) devices 1260 to the GMCH 1290. Alternatively, one or both of the memory and graphics controllers are integrated within the processor, the memory 1240 and the coprocessor 1245 are coupled directly to the processor 1210, and the controller hub 1220 is in a single chip with the IOH 1250.

The optional nature of additional processors 1215 is denoted in Figure 14 with broken lines. Each processor 1210, 1215 may include one or more processing cores and may be some version of processor 12.

The memory 1240 may be, for example, dynamic random-access memory (DRAM), phase change memory (PCM), or a combination of the two. For at least one embodiment, the controller hub 1220 communicates with the processor(s) 1210, 1215 via a multi-drop bus, such as a frontside bus (FSB), point-to-point interface such as QuickPath Interconnect (QPI), or similar connection 1295.

In one embodiment, the coprocessor 1245 is a special-purpose processor, such as, for example, a high-throughput MIC processor, a network or communication processor, a compression engine, graphics processing unit (GPU), a general purpose GPU (GPGPU), an embedded processor, a BW accelerator, or the like. In one embodiment, controller hub 1220 may include an integrated graphics accelerator.

There can be a variety of differences between the physical resources 1210, 1215 in terms of a spectrum of metrics of merit including architectural, microarchitectural, thermal, power consumption characteristics, and the like.

In one embodiment, the processor 1210 executes instructions that control data processing operations of a general type. Embedded within the instructions may be coprocessor instructions. The processor 1210 recognizes these coprocessor instructions as being of a type that should be executed by the attached coprocessor 1245. Accordingly, the processor 1210 issues these coprocessor instructions (or control signals representing coprocessor instructions) on a coprocessor bus or other interconnect, to coprocessor 1245. Coprocessor(s) 1245 accept and execute the received coprocessor instructions.

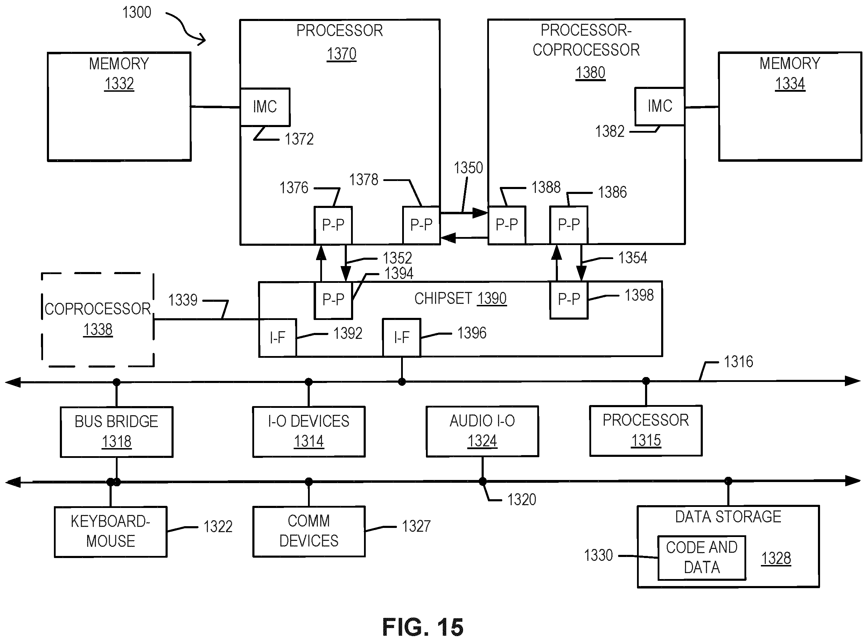

**Figure 15** is a block diagram of a first more specific exemplary system 1300 according to one or more embodiments. As shown in Figure 15, multiprocessor system 1300 is a point-to-point interconnect system, and includes a first processor 1370 and a second processor 1380 coupled via a point-to-point interconnect 1350. Each of processors 1370 and 1380 may be some version of processor 12. In one embodiment, processors 1370 and 1380 are respectively processors 1210 and 1215, while coprocessor 1338 is coprocessor 1245. In another embodiment, processors 1370 and 1380 are respectively processor 1210 and coprocessor 1245. Alternatively, processor 1380 may be a BW accelerator.

Processors 1370 and 1380 are shown including integrated memory controller (IMC) units 1372 and 1382, respectively. Processor 1370 also includes as part of its bus controller unit's point-to-point (P-P) interfaces 1376 and 1378; similarly, second processor 1380 includes P-P interfaces 1386 and 1388. Processors 1370, 1380 may exchange information via a P-P interface 1350 using P-P interface circuits 1378, 1388. As shown in Figure 15, IMCs 1372 and 1382 couple the processors to respective memories, namely a memory 1332 and a memory 1334, which may be portions of main memory locally attached to the respective processors.

Processors 1370, 1380 may each exchange information with a chipset 1390 via individual P-P interfaces 1352, 1354 using point to point interface circuits 1376, 1394, 1386, 1398. Chipset 1390 may optionally exchange information with the coprocessor 1338 via a high-performance interface 1339. In one embodiment, the coprocessor 1338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1390 may be coupled to a first bus 1316 via an interface 1396. In one embodiment, first bus 1316 may be a Peripheral Component Interconnect (PCI) bus, or a bus such as a PCI Express bus or another third generation I/O interconnect bus, although the scope of the present invention is not so limited.

As shown in Figure 15, various I/O devices 1314 may be coupled to first bus 1316, along with a bus bridge 1318 which couples first bus 1316 to a second bus 1320. In one embodiment, one or more additional processors 1315, such as coprocessors, high-throughput MIC processors, GPGPUs, accelerators (such as, e.g., graphics accelerators or digital signal processing (DSP) units), field programmable gate arrays (FPGAs), or any other processor, are coupled to first bus 1316. In one embodiment, second bus 1320 may be a low pin count (LPC) bus. Various devices may be coupled to a second bus 1320 including, for example, a keyboard and/or mouse 1322, communication devices 1327 and a storage unit 1328 such as a disk drive or other mass storage device which may include instructions/code and data 1330, in one embodiment. Further, an audio I/O 1324 may be coupled to the second bus 1320. Note that other architectures are possible. For example, instead of the point-to-point architecture of Figure 15, a system may implement a multi-drop bus or other such architecture.

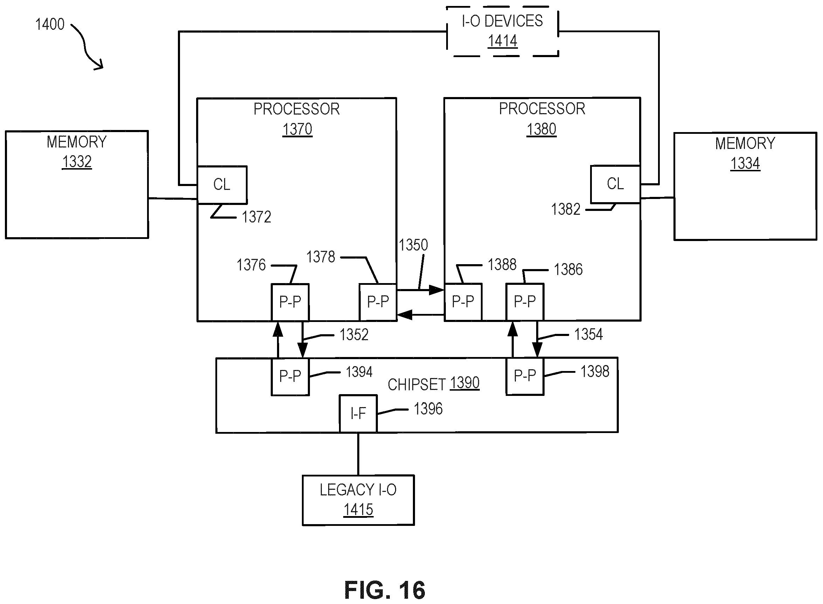

**Figure 16** is a block diagram of a second more specific exemplary system 1400 in accordance with on one or more embodiments. Certain aspects of Figure 15 have been omitted from Figure 16 in order to avoid obscuring other aspects of Figure 16.

Figure 16 illustrates that the processors 1370, 1380 may include integrated memory and I/O control logic ("CL") 1372 and 1382, respectively. Thus, the CL 1372, 1382 include integrated memory controller units and include I/O control logic. Figure 16 illustrates that not only are the memories 1332, 1334 coupled to the CL 1372, 1382, but also that I/O devices 1414 are also coupled to the control logic 1372, 1382. Legacy I/O devices 1415 are coupled to the chipset 1390.

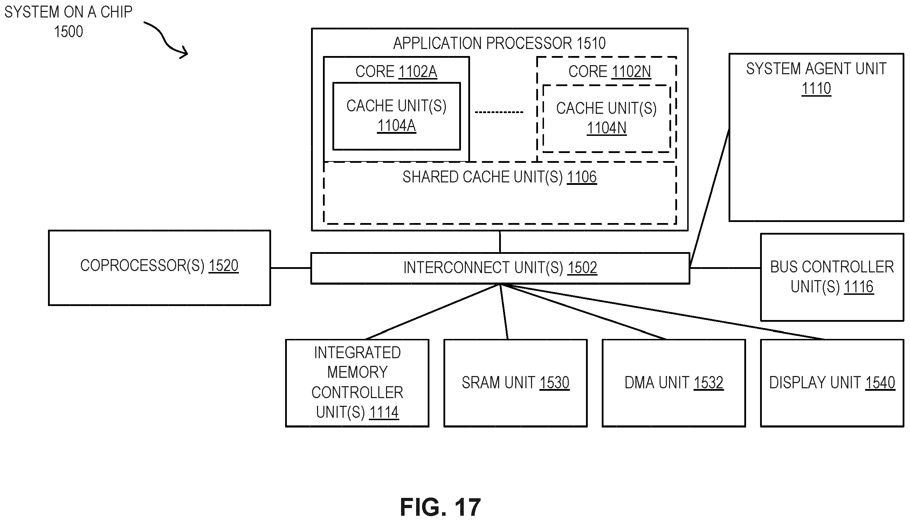

**Figure 17** is a block diagram of a system on a chip (SoC) 1500 according to one or more embodiments. Dashed lined boxes are optional features on more advanced SoCs. In Figure 17, an interconnect unit(s) 1502 is coupled to: an application processor 1510 which includes a set of one or more cores 1102A-N (including constituent cache units 1104A-N) and shared cache unit(s) 1106; a system agent unit 1110; a bus controller unit(s) 1116; an integrated memory controller unit(s) 1114; a set or one or more coprocessors 1520 which may include integrated graphics logic, an image processor, an audio processor, a video processor, and/or a BW accelerator; a static random-access memory (SRAM) unit 1530; a direct memory access (DMA) unit 1532; and a display unit 1540 for coupling to one or more external displays. In one embodiment, the coprocessor(s) 1520 include a special-purpose processor, such as, for example, a network or communication processor, compression engine, GPGPU, a high-throughput MIC processor, embedded processor, security processor, or the like.

Embodiments also include the following examples:

Example A1 is a processor package comprising at least one BW core, and an LV generator in the BW core. The LV generator is to generate FVs and BVs for a set of observations. The BW core also comprises a TP generator to generate TPs for the set of observations. The BW core also comprises an EP generator to generate EPs for the set of observations. The BW core is to generate, in parallel, at least two types of probability values from the group consisting of FVs, BVs, EPs, and TPs.

Example A2 is a processor package according to Example A1, further comprising an LVTP engine in the BW core. The LVTP engine comprises the LV generator and the TP generator. The LV generator is to make a completed BV available to the TP generator in response to generating that completed BV. The TP generator is to use that completed BV to generate at least one of the TPs before the LV generator has finished generating the BVs.

Example A3 is a processor package according to Example A2, wherein the EP generator is to generate at least one EP for the set of observations before the LV generator has finished generating the BVs.

Example A4 is a processor package according to Example A1, further comprising at least first and second LVTP engines in the BW core. The first LVTP engine includes a first LV generator to generate FVs for a first subset of observations from the set of observations. The second LVTP engine includes a second LV generator to generate FVs for a second subset of observations from the set of observations. The first and second LVTPs are to work in parallel on generating FVs. Example A4 may also include the features of any one or more of Examples A2-A3.

Example A5 is a processor package according to Example A4, further comprising at least first and second LVTP assemblages in the BW core. The first LVTP assemblage comprises the first and second LVTP engines, and the second LVTP assemblage comprises third and fourth LVTP engines. Also, the first, second, third, and fourth LVTP engines are to work in parallel on generating FVs.

Example A6 is a processor package according to Example A1, further comprising a global event controller in communication with the BW core. The global event controller is to enable an application to specify parameters for applying a Baum-Welch algorithm to the set of observations, wherein the parameters comprise a numeric parameter to specify how many potential states are available for an observation. Example A6 may also include the features of any one or more of Examples A2-A5.

Example A7 is a processor package according to Example A1, wherein the BW core supports a BW acceleration instruction which comprises a first parameter to specify a number of observation slices to be processed and a second parameter to specify a number of observations to be processed per observation slice. Example A7 may also include the features of any one or more of Examples A2-A6.

Example A8 is a processor package according to Example A1, further comprising a TP cache in the BW core, wherein the TP generator is to save the generated TPs to the TP cache and read TP data from the TP cache. Example A8 may also include the features of any one or more of Examples A2-A7.

Example A9 is a processor package according to Example A8, further comprising a global event controller in communication with the BW core. The global event controller is to copy TPs for an initial TP matrix into the TP cache.

Example A10 is a processor package according to Example A1, further comprising an L1C in the BW core. Also, the EP generator is to save the generated EPs to the L1C. Example A10 may also include the features of any one or more of Examples A2-A9.

Example B1 is a data processing system comprising a host processer, RAM in communication with the host processor, and at least one BW core in communication with the host processor. The BW core comprises an LV generator to generate FVs and BVs for a set of observations, a TP generator to generate TPs for the set of observations; and an EP generator to generate EPs for the set of observations. Also, the BW core is to generate, in parallel, at least two types of probability values from the group consisting of FVs, BVs, EPs, and TPs.

Example B2 is a data processing system according to Example B1, further comprising an LVTP engine in the BW core. The LVTP engine comprises the LV generator and the TP generator. Also, the LV generator is to make a completed BV available to the TP generator in response to generating that completed BV, and the TP generator is to use that completed BV to generate at least one of the TPs before the LV generator has finished generating the BVs.

Example B3 is a data processing system according to Example B1, further comprising a processor package that comprises the host processor, the BW core, and a global event controller. The global event controller is to enable an application to specify parameters for applying a Baum-Welch algorithm to the set of observations, wherein the parameters comprise a first parameter to specify how many potential states are available for an observation. Example B3 may also include the features of Example B2.

Example B4 is a data processing system according to Example B1, wherein the at least one BW core comprises a first BW core and a second BW core. Also, the data processing system further comprises a global event controller. The global event controller is (a) to automatically split an original set of observations from an application into first and second subsets, (b) to cause the first BW core to generate TPs for the first subset, and (c) to cause the second BW core to generate TPs for the second subset. Example B4 may also include the features of any one or more of Examples B2-B3.

Example B5 is a data processing system according to Example B4, further comprising a first L1C in the first BW core and a second L1C in the second BW core. Also, the global event controller is to (a) automatically generate a first tile comprising the first subset of observations and a first set of filters, (b) automatically generate a second tile comprising the second subset of observations and a second set of filters, (c) load the first tile into the first L1C, and (d) load the second tile into the second L1C.

Example B6 is a data processing system according to Example B1, further comprising at least first and second LVTP engines in the BW core. The first LVTP engine includes a first LV generator to generate FVs for a first subset of observations from the set of observations. The second LVTP engine includes a second LV generator to generate FVs for a second subset of observations from the set of observations. The first and second LVTPs are to work in parallel on generating FVs. Example B6 may also include the features of any one or more of Examples B2-B5.

Example B7 is a data processing system according to Example B6, wherein the at least one BW core comprises a first BW core and a second BW core; the first BW core comprises multiple LVTP assemblages, each comprising multiple LVTP engines; the second BW core comprises multiple LVTP assemblages, each comprising multiple LVTP engines; and LVTP engines from all of said LVTP assemblages in all of said BW cores are to work in parallel on generating FVs.

Example C1 is an apparatus comprising a computer-readable medium, and instructions in the computer-readable medium which, when executed by a host core in a data processing system that comprises a BW subsystem that comprises at least one BW core, cause the BW subsystem to (a) generate FVs and BVs for a set of observations; (b) generate TPs for the set of observations; and (c) generate EPs for the set of observations; wherein the instructions, when executed, cause the BW subsystem to generate, in parallel, at least two types of probability values from the group consisting of FVs, BVs, EPs, and TPs.

Example C2 is an apparatus according to Example C1, wherein the instructions, when executed, cause a global event controller in the BW subsystem to configure the BW subsystem, based on parameters provided by an application, wherein the parameters comprise a numeric parameter to specify how many potential states are available for an observation.

Example C3 is an apparatus according to Example C2, wherein the instructions, when executed, further cause the global event controller to (a) automatically split an original set of observations from an application into first and second subsets, (b) use a first BW core in the BW subsystem to generate FVs for the first subset, and (c) use a second BW core in the BW subsystem to generate FVs for the second subset.

Example D1 is a processor package comprising at least one BW core; an LV generator in the BW core, the LV generator to generate FVs and BVs for a set of observations; an EP generator in the BW core, the EP generator to generate EPs for the set of observations; a TP generator in the BW core, the TP generator to generate TPs for the set of observations; and TELUT storage in the BW core, the TELUT storage to store preconfigured T*E values to be used by the LV generator when generating FVs and BVs.

Example D2 comprises a processor package according to Example D1, wherein the TELUT storage enables the TP generator to complete an iteration of a Baum-Welch algorithm without computing T*E values for at least some of the observations in the set of observations.

Example D3 is a processor package according to Example D1, further comprising at least first and second LVTP engines in the BW core. The first LVTP engine comprises a first LV generator and a first TELUT storage, the first LV generator to generate FVs for a first subset of observations from the set of observations. The second LVTP engine comprises a second LV generator and a second TELUT storage, the second LV generator to generate FVs for a second subset of observations from the set of observations. The first and second LVTPs are to work in parallel on generating FVs. The first and second LV generators are to use T*E values from the first and second TELUT storages, respectively, when generating FVs and BVs. Example D3 may also include the features of Example D2.

Example D4 is a processor package according to Example D1, further comprising a control section in the BW core, the control section to compare FVs to a threshold value and to discard FVs with values below the threshold value. Example D4 may also include the features of any one or more of Examples D2-D3.

Example D5 is a processor package according to Example D4, wherein the control section is further to sort FVs during a first timestamp, compare the FVs to a threshold probability value, and discard FVs with values below the threshold value during a second timestamp.

Example D6 is a processor package according to Example D4, wherein the control section is further to sort FVs during a first timestamp, determine a threshold probability value to classify a threshold amount of FVs to be retained, and discard FVs with values below the threshold probability value during a second timestamp. Example D6 may also include the features of Example D5.

Example D7 is a processor package according to Example D1, further comprising a global event controller in communication with the BW core, the global event controller to configure the TELUT storage with predetermined T*E values before the LV generator starts generating FVs and BVs. Example D7 may also include the features of any one or more of Examples D2-D6.

Example D8 is a processor package according to Example D7, wherein the TELUT storage is to store at least one TELUT comprising 36 entries.

Example D9 is a processor package according to Example D1, wherein the BW core is to generate, in parallel, at least two types of probability values from the group consisting of FVs, BVs, EPs, and TPs. Example d9 may also include the features of any one or more of Examples D2-D8.

Example D10 is processor package according to Example D9, wherein the EP generator is to generate at least one EP for the set of observations before the LV generator has finished generating the BVs.

Example D11 is a processor package according to Example D1, further comprising a host core in communication with the BW core.

Example E1 is a data processing system comprising a host processer, RAM in communication with the host processor, at least one BW core in communication with the host processor, and an LV generator in the BW core. The LV generator is to generate FVs and BVs for a set of observations. The BW core also comprises an EP generator and a TP generator. The EP generator is to generate EPs for the set of observations, and the TP generator is to generate TPs for the set of observations. The BW core also comprises TELUT storage to store a TELUT comprising preconfigured T*E values to be used by the LV generator when generating FVs and BVs.

Example E2 is a data processing system according to Example E1, wherein the TELUT storage enables the TP generator to complete an iteration of a Baum-Welch algorithm without computing T*E values for at least some of the observations in the set of observations.

Example E3 is a data processing system according to Example E1, further comprising at least first and second LVTP engines in the BW core. The first LVTP engine comprises a first LV generator and a first TELUT storage, the first LV generator to generate FVs for a first subset of observations from the set of observations. The second LVTP engine comprises a second LV generator and a second TELUT storage, the second LV generator to generate FVs for a second subset of observations from the set of observations. Also, the first and second LVTPs are to work in parallel on generating FVs, and the first and second LV generators are to use $T*E$ values from the first and second TELUT storages, respectively, when generating FVs and BVs. Example E3 may also include the features of Example E2.

Example E4 is a data processing system according to Example E1, further comprising a control section in the BW core, the control section to compare FVs to a threshold value and to discard FVs with values below the threshold value. Example E4 may also include the features of any one or more of Examples E2-E3.

Example E5 is a data processing system according to Example E4, wherein the control section is further to sort FVs during a first timestamp, compare the FVs to a threshold probability value, and discard FVs with values below the threshold value during a second timestamp.

Example E6 is a data processing system according to Example E4, wherein the control section is further to sort FVs during a first timestamp, determine a threshold probability value to classify a threshold amount of FVs to be retained, and discard FVs with values below the threshold probability value during a second timestamp. Example E6 may also include the features of Example E5.

Example E7 is a data processing system according to Example E1, further comprising a global event controller in communication with the BW core, the global event controller to configure the TELUT storage with predetermined $T*E$ values before the LV generator starts generating FVs and BVs. Example E7 may also include the features of any one or more of Examples E2-E6.

Example E8 is a data processing system according to Example E1, wherein the BW core is to generate, in parallel, at least two types of probability values from the group consisting of FVs, BVs, EPs, and TPs. Example E8 may also include the features of any one or more of Examples E2-E7.

Example F1 is an apparatus comprising a computer-readable medium and instructions in the computer-readable medium which, when executed by a host core in data processing system that comprises a BW subsystem that comprises at least one BW core, cause the BW subsystem to (a) generate FVs and BVs for a set of observations, based at least in part on preconfigured $T*E$ values from TELUT storage in the BW core; (b) generate EPs for the set of observations; and (c) generate TPs for the set of observations.

Example F2 is an apparatus according to Example F1, wherein the TELUT storage enables a TP generator in the BW subsystem to complete an iteration of a Baum-Welch algorithm without computing $T*E$ values for at least some of the observations in the set of observations.

In light of the principles and example embodiments described in the present disclosure by text and/or illustration, one with skill in the art will recognize that the described embodiments can be modified in arrangement and detail without departing from the principles described herein. Furthermore, this disclosure uses expressions such as "one embodiment" and "another embodiment" to describe embodiment possibilities. However, those expressions are not intended to limit the scope of this disclosure to particular embodiment configurations. For instance, those expressions may reference the same embodiment or different embodiments, and those different embodiments are combinable into other embodiments.

Additionally, the present teachings may be used to advantage in many different kinds of data processing systems. Such data processing systems may include, without limitation, mainframe computers, mini-computers, supercomputers, high-performance computing systems, computing clusters, distributed computing systems, personal computers (PCs), workstations, servers, client-server systems, portable computers, laptop computers, tablet computers, entertainment devices, audio devices, video devices, audio/video devices (e.g., televisions and set-top boxes), handheld devices, smartphones, telephones, personal digital assistants (PDAs), wearable devices, vehicular processing systems, accelerators, systems on a chip (SoCs), and other devices for processing and/or transmitting information. Accordingly, unless explicitly specified otherwise or required by the context, references to any particular type of data processing system (e.g., a PC) should be understood as encompassing other types of data processing systems, as well. A data processing system may also be referred to as an "apparatus." The components of a data processing system may also be referred to as "apparatus."

Also, according to the present disclosure, a device may include instructions and other data which, when accessed by a processor, cause the device to perform particular operations. For purposes of this disclosure, instructions or other data which cause a device to perform operations may be referred to in general as "software" or "control logic". Software that is used during a boot process may be referred to as "firmware." Software that is stored in non-volatile memory may also be referred to as "firmware." Software may be organized using any suitable structure or combination of structures. Accordingly, terms like program and module may be used in general to cover a broad range of software constructs, including, without limitation, application programs, subprograms, routines, functions, procedures, drivers, libraries, data structures, processes, microcode, and other types of software components. Also, it should be understood that a software module may include more than one component, and those components may cooperate to complete the operations of the module. Also, the operations which the software causes a device to perform may include creating an operating context, instantiating a particular data structure, etc. Also, embodiments may include software that is implemented using any suitable operating environment and programming language (or combination of operating environments and programming languages). For example, program code may be implemented in a compiled language, in an interpreted language, in a procedural language, in an object-oriented language, in assembly language, in machine language, or in any other suitable language.

A medium which contains data and which allows another component to obtain that data may be referred to as a "machine-accessible medium" or a "machine-readable medium." Accordingly, embodiments may include machine-readable media containing instructions for performing some or all of the operations described herein. Such media may be referred to in general as "apparatus" and in particular as "program products." In one embodiment, software for multiple components may be stored in one machine-readable medium. In other embodiments, two or more machine-readable media may be used to store the software for one or more components. For instance, instructions for one component may be stored in one medium, and instructions another component may be stored in another medium. Or a portion of the instructions for one component may be stored in one medium, and the rest of the instructions for that component (as well instructions for other components), may be stored in one or more other media. Similarly, software that is described above as residing on a particular device in one embodiment may, in other embodiments, reside on one or more other devices. For instance, in a distributed environment, some software may be stored locally, and some may be stored remotely. The machine-readable media for some embodiments may include, without limitation, tangible non-transitory storage components such as magnetic disks, optical disks, magneto-optical disks, dynamic random-access memory (RAM), static RAM, non-volatile RAM (NVRAM), read-only memory (ROM), solid state drives (SSDs), phase change memory (PCM), etc., as well as processors, controllers, and other components that include data storage facilities. For purposes of this disclosure, the term "ROM" may be used in general to refer to non-volatile memory devices such as erasable programmable ROM (EPROM), electrically erasable programmable ROM (EEPROM), flash ROM, flash memory, etc.

Also, operations that are described as being performed on one particular device in one embodiment may, in other embodiments, be performed by one or more other devices. Also, although one or more example processes have been described with regard to particular operations performed in a particular sequence, numerous modifications could be applied to those processes to derive numerous alternative embodiments of the present invention. For example, alternative embodiments may include processes that use fewer than all of the disclosed operations, processes that use additional operations, and processes in which the individual operations disclosed herein are combined, subdivided, rearranged, or otherwise altered.

It should also be understood that the hardware and software components depicted herein represent functional elements that are reasonably self-contained so that each can be designed, constructed, or updated substantially independently of the others. In alternative embodiments, components may be implemented as hardware, software, or combinations of hardware and software for providing the functionality described and illustrated herein. For instance, in some embodiments, some or all of the control logic for implementing the described functionality may be implemented in hardware logic circuitry, such as with an application-specific integrated circuit (ASIC) or with a programmable gate array (PGA). Similarly, some or all of the control logic may be implemented as microcode in an integrated circuit chip. Also, terms such as "circuit" and "circuitry" may be used interchangeably herein. Those terms and terms like "logic" may be used to refer to analog circuitry, digital circuitry, processor circuitry, microcontroller circuitry, hardware logic circuitry, hard-wired circuitry, programmable circuitry, state machine circuitry, any other type of hardware component, or any suitable combination of hardware components.

Also, unless expressly specified otherwise, components that are described as being coupled to each other, in communication with each other, responsive to each other, or the like need not be in continuous communication with each other and need not be directly coupled to each other. Likewise, when one component is described as receiving data from or sending data to another component, that data may be sent or received through one or more intermediate components, unless expressly specified otherwise. In addition, some components of the data processing system may be implemented as adapter cards with interfaces (e.g., a connector) for communicating with a bus. Alternatively, devices or components may be implemented as embedded controllers, using components such as programmable or non-programmable logic devices or arrays, ASICs, embedded computers, smart cards, and the like. For purposes of this disclosure, the term "bus" includes pathways that may be shared by more than two devices, as well as point-to-point pathways. Similarly, terms such as "line," "pin," etc. should be understood as referring to a wire, a set of wires, or any other suitable conductor or set of conductors. For instance, a bus may include one or more serial links, a serial link may include one or more lanes, a lane may be composed of one or more differential signaling pairs, and the changing characteristics of the electricity that those conductors are carrying may be referred to as "signals." Also, for purpose of this disclosure, the term "processor" denotes a hardware component that is capable of executing software. For instance, a processor may be implemented as a central processing unit (CPU) or as any other suitable type of processing element. A CPU may include one or more processing cores. A processor package may also be referred to as a "processor." And a device may include one or more processors.

Other embodiments may be implemented in data and may be stored on a non-transitory storage medium, which if used by at least one machine, causes the at least one machine to fabricate at least one integrated circuit to perform one or more operations according to the present disclosure. Still further embodiments may be implemented in a computer-readable storage medium including information that, when manufactured into an SoC or other processor, is to configure the SoC or other processor to perform one or more operations according to the present disclosure. One or more aspects of at least one embodiment may be implemented by representative instructions, stored on a machine-readable medium, which represent various logic units within the processor, and which, when read by a machine, cause the machine to fabricate logic units to perform the techniques described herein. The instructions representing various logic units may be referred to as "IP cores," and they may be stored on a tangible, machine-readable medium and supplied to various customers or manufacturing facilities to load into the fabrication machines that make the logic units or the processor. One or more aspects of at least one embodiment may include machine-readable media containing instructions or design data which defines structures, circuits, apparatuses, processors and/or system features described herein. For instance, design data may be formatted in a hardware description language (HDL).

In view of the wide variety of useful permutations that may be readily derived from the example embodiments described herein, this detailed description is intended to be illustrative only, and should not be construed as limiting the scope of coverage.

## Claims

1. A processor package comprising:

   at least one Baum-Welch (BW) core;
   a likelihood-value (LV) generator in the BW core, the LV generator to generate forward values (FVs) and backward values (BVs) for a set of observations;
   a transition-probability (TP) generator in the BW core, the TP generator to generate TPs for the set of observations; and
   an emission-probability (EP) generator in the BW core, the EP generator to generate EPs for the set of observations; and
   wherein the BW core is to generate, in parallel, at least two types of probability values from the group consisting of FVs, BVs, EPs, and TPs.

2. A processor package according to claim 1, further comprising:
   a likelihood-value-and-transition-probability (LVTP) engine in the BW core, wherein:

   the LVTP engine comprises the LV generator and the TP generator;
   the LV generator is to make a completed BV available to the TP generator in response to generating that completed BV; and
   the TP generator is to use that completed BV to generate at least one of the TPs before the LV generator has finished generating the BVs.

3. A processor package according to claim 2, wherein the EP generator is to generate at least one EP for the set of observations before the LV generator has finished generating the BVs.

4. A processor package according to claim 1, further comprising:
   at least first and second likelihood-value-and-transition-probability (LVTP) engines in the BW core, wherein:

   the first LVTP engine includes a first LV generator to generate FVs for a first subset of observations from the set of observations;
   the second LVTP engine includes a second LV generator to generate FVs for a second subset of observations from the set of observations; and
   the first and second LVTPs are to work in parallel on generating FVs.

5. A processor package according to claim 4, further comprising:
   at least first and second LVTP assemblages in the BW core, wherein:

   the first LVTP assemblage comprises the first and second LVTP engines;
   the second LVTP assemblage comprises third and fourth LVTP engines; and
   the first, second, third, and fourth LVTP engines are to work in parallel on generating FVs.

**6.** A processor package according to claim 1, further comprising:
a global event controller in communication with the BW core, the global event controller to enable an application to specify parameters for applying a Baum-Welch algorithm to the set of observations, wherein the parameters comprise a numeric parameter to specify how many potential states are available for an observation.

**7.** A processor package according to claim 1, wherein the BW core supports a BW acceleration instruction which comprises:

a first parameter to specify a number of observation slices to be processed; and
a second parameter to specify a number of observations to be processed per observation slice.

**8.** A processor package according to claim 1, further comprising:

a TP cache in the BW core, wherein the TP generator is to save the generated TPs to the TP cache and read TP data from the TP cache; and
a global event controller in communication with the BW core, the global event controller to copy TPs for an initial TP matrix into the TP cache.

**9.** A processor package according to claim 1, further comprising:

a level-one cache (L1C) in the BW core; and
wherein the EP generator is to save the generated EPs to the L1C.

**10.** A processor package according to claim 1, further comprising:
a host core in communication with the BW core.

**11.** A method comprising:

at a host core in a data processing system that comprises a Baum-Welch (BW) subsystem that comprises at least one BW core, executing instructions which cause the BW subsystem to:

generate forward values (FVs) and backward values (BVs) for a set of observations;
generate transition probabilities (TPs) for the set of observations; and
generate emission probabilities (EPs) for the set of observations; and

wherein the operations of generating FVs, BVs, TPs, and EPs comprise generating, in parallel, at least two types of probability values from the group consisting of FVs, BVs, EPs, and TPs.

**12.** A method according to claim 11, further comprising:
configuring the BW subsystem, based on parameters provided by an application, wherein the parameters comprise a numeric parameter to specify how many potential states are available for an observation, and wherein the operation of configuring the BW subsystem is performed by a global event controller in the BW subsystem.

**13.** A method according to claim 11, further comprising:

by the LV generator, making a completed BV available to the TP generator in response to generating that completed BV; and
by the TP generator, using that completed BV to generate at least one of the TPs before the LV generator has finished generating the BVs.

**14.** A machine-readable medium comprising instructions which, when executed by a machine, cause the machine to perform the method of any one of claims 11-13.

**15.** A data processing system comprising means for performing the method of any one of claims 11-13.

**FIG. 1**

Data Processing System 10

Processor Package 12

System Agent 30

BW Subsystem 50

Global Event Controller 52

Baum-Welch Accelerator 41

BW Core 40B

BW Core 40A

46B

L1C 46A

Host Core 20

Application 62

L1 DMA Engine 36

TP DMA Engine 38

L2C 32

L2 DMA Engine 34

NVS 18

Application 62

OS 60

Application 62

BW Output Data 66

BW Input Data 64

RAM 14

EP 4 020 332 A1

**FV Matrix 230**

| src3-F | → | FV Matrix 230 |

FV Slice #1

| $FV_1$ |
| $FV_2$ |
| . . . |
| $FV_{500}$ |

FV Slice #2

FV Slice #3

FV Slice #4

FV Slice #5

FV Slice #6

BV Matrix 240

**BW Output Data 66**

| Posterior/Final EP Matrix 212 | Posterior/Final TP Matrix 222 |
|---|---|
| EP Slice #1 | TP Slice #1 |
| EP Slice #2 | TP Slice #2 |
| EP Slice #3 | TP Slice #3 |
| EP Slice #4 | TP Slice #4 |
| EP Slice #5 | TP Slice #5 |
| EP Slice #6 | TP Slice #6 |

dest →

**Initial EP Matrix 210**

| From Position t \ To State $V_i$ | A | C | G | U |
|---|---|---|---|---|
| $t_1$ | Probability that $S_1 = A$ | Probability that $S_1 = C$ | Probability that $S_1 = G$ | Probability that $S_1 = U$ |
| $t_2$ | Probability that $S_2 = A$ | Probability that $S_2 = C$ | Probability that $S_2 = G$ | Probability that $S_2 = U$ |
| . . . | | | | |
| $t_{3000}$ | Probability that $S_{3000} = A$ | Probability that $S_{3000} = C$ | Probability that $S_{3000} = G$ | Probability that $S_{3000} = U$ |

**FIG. 2**

**Initial TP Matrix 220**

| From State $V_i$ at Position t \ To State $V_i$ at Position t+1 | | A | C | G | U |
|---|---|---|---|---|---|
| t = 1 | $A_1$ | Probability that $V_{t+1}$= A | Probability that $V_{t+1}$= C | Probability that $V_{t+1}$= G | Probability that $V_{t+1}$= U |
| | $C_1$ | Probability that $V_{t+1}$= A | Probability that $V_{t+1}$= C | Probability that $V_{t+1}$= G | Probability that $V_{t+1}$= U |
| | $G_1$ | . . . | | | |
| | $U_1$ | | | | |
| t = 2 | $A_2$ | Probability that $V_{t+1}$= A | Probability that $V_{t+1}$= C | Probability that $V_{t+1}$= G | Probability that $V_{t+1}$= U |
| | $C_2$ | . . . | | | |
| | $G_2$ | | | | |
| | $U_2$ | | | | |
| . . . | $A_3$ | Probability that $V_{t+1}$= A | Probability that $V_{t+1}$= C | Probability that $V_{t+1}$= G | Probability that $V_{t+1}$= U |
| | | . . . | | | |

**FIG. 3**

EP 4 020 332 A1

RAM 14

"src2"

"src1"

Tile 63A (X = 3 input slices)

| Slice #1 | Slice #2 | Slice #3 | FB #1 | FB #2 | FB #3 |

Tile 63B (X = 3 input slices)

| Slice #4 | Slice #5 | Slice #6 | FB #4 | FB #5 | FB #6 |

Filter Block #1 (With S = 500 Filters)

| Vector #1 From The Current EP Matrix | Vectors #1-#4 From The Current TP Matrix | Filter #1 |
| Vector #2 From The Current EP Matrix | Vectors #5-#8 From The Current TP Matrix | Filter #2 |
| ... | | |
| Vector #500 From The Current EP Matrix | Vectors #1997-#2000 From The Current TP Matrix | Filter #500 |

Filter Block #2

| Vector #501 From The Current EP Matrix | Corresponding Vectors From The Current TP Matrix | Filter #501 |
| Vector #502 From The Current EP Matrix | Corresponding Vectors From The Current TP Matrix | Filter #502 |
| ... | | |
| Vector #1000 From The Current EP Matrix | Corresponding Vectors From The Current TP Matrix | Filter #1000 |

...

FIG. 4

318 — Configure BW Core(s) And Other Components Of BW Subsystem

Start

310 — Configure Global Event Controller

312 — Start BW Subsystem

314 — Determine Tile Attributes And Number Of Tiles Needed

316 — Create Input Slices, Filters, Filter Blocks, And Tiles

320 — For Each Tile, Load A BW Unit Into A BW Core And Use The BWTPL Instruction To Load TP Vectors Into TP Cache

322 — Use BWAXF Instruction(s) To Start BW Core(s)

324 — Process Current Input Slice

Yes

334 — Save Posterior EP And TP Slices To Dest

330 — Convergence Threshold Met?

340 — All Input Slices Processed?

No

342 — Update Pointers To Next Slice

No

332 — Save Posterior EP and TP slices As Current TPs and EP slices

Yes

350 — All Tiles Processed?

No

352 — Save Posterior EPs and TPs As BW Output Data

Yes

End

FIG. 5

FIG. 6

FIG. 7

BW Core  40A

L1C  46

Compute Section  90

Control Section  50

Input Read
Controller 52

Maximization-
Parameter Read
Controller 54

EP Update
Controller 56

Sorting
Histogram
Creator  58

Read-Write
Arbiter 60

Index Generator  72

EP Generator  74

LVTP Generator  80

LVTP Assemblage
82A

82B

LVTP Engines
84

Registers  86

Forward Write Selector
88

EP 4 020 332 A1

**FIG. 8**

EP 4 020 332 A1

Compute Section  90

LVs  91

LVTP Assemblage  82A

*Broadcast*

LVTP Engine  84A

LVTP Engine  84B

Index Generator
72

LVTP Engine  84C

LVTP Engine  84D

*Output Data*

Registers  86

FIG. 9

**FIG. 10**

EP 4 020 332 A1

**FIG. 11**

EP 4 020 332 A1

*From EP Update Controller*

*From-To Memory*

*From EP Update Controller*

Emission Division Pipe 130

Numerator Address Generator 132

Output Address Generator 134

Memory Interface 136

FP Division Pipe 139

Denominator Address Generator 138

**FIG. 12**

FIG. 13

LVTP Engine 910

TP Generator 930
Current Transition Numerator

- FP Division Pipe 942
- Numerator & Denominator
- TP Cache 940
- Multiplexer 936
- Adder 934
- Updated Transition Numerator
- Multiplier 932
- Multiplier 944
- Computed T*E
- Registers 950
- EP
- L1C 970
- Current FV
- Computed FV
- Forward Write Selector 960
- Computed BV

LV Generator 920
- TELUT Storage 980
- Four T*Es
- Dot-Product Tree 922
- Accumulator 924
- Reduction Tree 926
- LVs
- Computed LV

Sorting Histogram Manager 990

**FIG. 14**

**FIG. 15**

FIG. 16

SYSTEM ON A CHIP
1500

APPLICATION PROCESSOR 1510

CORE 1102A

CACHE UNIT(S)
1104A

CORE 1102N

CACHE UNIT(S)
1104N

SHARED CACHE UNIT(S) 1106

SYSTEM AGENT UNIT
1110

COPROCESSOR(S) 1520

INTERCONNECT UNIT(S) 1502

BUS CONTROLLER
UNIT(S) 1116

INTEGRATED
MEMORY
CONTROLLER
UNIT(S) 1114

SRAM UNIT 1530

DMA UNIT 1532

DISPLAY UNIT 1540

FIG. 17

EP 4 020 332 A1

Europäisches
Patentamt

European
Patent Office

Office européen
des brevets

# EUROPEAN SEARCH REPORT

Application Number

EP 21 19 8520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU LEIMING ET AL: "GPU-Accelerated HMM for Speech Recognition", INTERNATIONAL CONFERENCE ON PARALLEL PROCESSING WORKSHOP. PROCEEDINGS, IEEE, US, 9 September 2014 (2014-09-09), pages 395-402, XP032775880, ISSN: 1530-2016, DOI: 10.1109/ICPPW.2014.59 [retrieved on 2015-05-07] | 1-6,8-15 | INV. G06N7/04  ADD. G06N3/04 |
| Y | * page 395 - page 402, line 1, paragraph r * | 7 | |
| Y | Liu Chuan: "cuHMM: a CUDA Implementation of Hidden Markov Model Training and Classification", , 6 May 2009 (2009-05-06), XP055905274, Retrieved from the Internet: URL:https://www.liuchuan.org/pub/cuHMM.pdf [retrieved on 2022-03-25] | 7 | |
| A | * Section 3; figures 5,6 * | 1-6,8-15 | TECHNICAL FIELDS SEARCHED (IPC)  G06N |
| A | PIETRAS M. ET AL: "FPGA implementation of logarithmic versions of Baum-Welch and Viterbi algorithms for reduced precision hidden Markov models", BULLETIN OF THE POLISH ACADEMY OF SCIENCES TECHNICAL SCIENCES, vol. 65, no. 6, 1 December 2017 (2017-12-01), pages 935-947, XP055905256, DOI: 10.1515/bpasts-2017-0101 * the whole document * | 1-15 | |

-/--

The present search report has been drawn up for all claims

| Place of search | Date of completion of the search | Examiner |
|---|---|---|
| The Hague | 28 March 2022 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

## EUROPEAN SEARCH REPORT

Europäisches Patentamt
European Patent Office
Office européen des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OM JI OMER ET AL: "AccSS3D: Accelerator for Spatially Sparse 3D DNNs", ARXIV.ORG, CORNELL UNIVERSITY LIBRARY, 201 OLIN LIBRARY CORNELL UNIVERSITY ITHACA, NY 14853, 25 November 2020 (2020-11-25), XP081822234, * the whole document * | 1-15 | |
| A | JUN-ICHI TAKAHASHI: "A HARDWARE ARCHITECTURE DESIGN METHODOLOGY FOR HIDDEN MARKOV MODEL BASED RECOGNITION SYSTEMS USING PARALLEL PROCESSING", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. 76A, no. 6, 1 June 1993 (1993-06-01), pages 990-1000, XP000390398, ISSN: 0916-8508 * the whole document * | 1-15 | |
| A | EP 3 343 392 A1 (INTEL CORP [US]) 4 July 2018 (2018-07-04) * the whole document * | 1-15 | TECHNICAL FIELDS SEARCHED (IPC) |

The present search report has been drawn up for all claims

| Place of search | Date of completion of the search | Examiner |
|---|---|---|
| The Hague | 28 March 2022 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 020 332 A1

**ANNEX TO THE EUROPEAN SEARCH REPORT
ON EUROPEAN PATENT APPLICATION NO.**

EP 21 19 8520

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2022

| Patent document cited in search report | | Publication date | Patent family member(s) | | Publication date |
|---|---|---|---|---|---|
| EP 3343392 | A1 | 04-07-2018 | CN | 108268320 A | 10-07-2018 |
| | | | EP | 3343392 A1 | 04-07-2018 |
| | | | US | 2018189675 A1 | 05-07-2018 |

For more details about this annex : see Official Journal of the European Patent Office, No. 12/82